# EUROPEAN PATENT SPECIFICATION

(11) **EP 2 655 993 B1**
(45) Date of publication and mention of the grant of the patent: **18.07.2018**
(21) Application number: 11837305.9
(22) Date of filing: 22.12.2011
(51) Int. Cl.: F27B 7/02, F27B 7/32, F27B 7/33, C10B 1/10, C10B 47/30, C10B 49/16, F23G 5/20

(54) **MODULAR PLANT FOR PERFORMING CONVERSION PROCESSES OF CARBONACEOUS MATRICES**
MODULARE ANLAGE FÜR UMWANDLUNGSVERFAHREN VON KOHLENSTOFFHALTIGEN MATRIZEN
INSTALLATION MODULAIRE PERMETTANT DE RÉALISER DES PROCÉDÉS DE CONVERSION DE MATRICES CARBONÉES

(30) Priority: 23.12.2010 IT TO20101043
(43) Date of publication of application: 30.10.2013
(73) Proprietor: Sea Marconi Technologies Di Vander Tumiatti S.a.s., 10093 Collegno (Torino) (IT)
(72) Inventor: TUMIATTI, Vander, 10090 Rosta (Torino) (IT); TUMIATTI, Michela, 10143 Torino (IT); KAPILA, Shubhender, Rolla, Missouri 65401 (US); LENZI, Francesco, 52010 Bibbiena (Arezzo) (IT); ROGGERO, Carlo, 10144 Torino (IT)
(74) Representative: Gerbino, Angelo
(86) International application number: PCT/IB2011/055907
(87) International publication number: WO 2012/085880

(56) References cited:
- EP-A2- 0 086 488
- DE-C- 380 035
- US-A- 2 723 226

## Description

### Field of application

This invention relates to a modular plant performing integrated processes for conversion of carbonaceous matrices to obtain and/or to increase the value of "derived products", such as "energetic or bio-energetic carriers" or "energy or bio-energy" with little or no negative impact on the environment by being "CO2-neutral - CO2n" or "CO2-Negative - CO2N" and/or "Zero Emissions - ZE".
Within this description of the invention and its field of application, the main terms are defined below.
The "conversion processes" are processes capable of modifying one or more physical, chemical, biological and toxicological properties of the carbonaceous matrices. As simplifying but not limiting example, the conversion processes include physical, chemical, thermo-chemical, electro-chemical and bio-chemical: extraction (oils; liquids; active principles; essences, substances; tannins, cellulose, hemicelluloses, lignin, etc.); transesterification; chemical-physical decontamination; detoxification; dehalogenation; depolarization; synthesis of substances and organic and/or organ metallic compounds; phase transfer catalysis,; enzymatic catalysis; depolymerization; extraction with "Steam explosion - SE", drying/thermal desorption; torrefaction; pyrolysis; gasification; catalytic hydrothermal gasification; Gas to Liquid (GtL) or Biomass to Liquid (BtL) or combustion.
"Carbonaceous matrices" can be solids, liquids and gases containing and/or contaminated by organic substances. Few selected but not limiting examples, are carbonaceous matrices including: biomasses, greases or by-products of animal processing; organic fraction of agricultural, municipal, industrial and hospital wastes; urban and industrial sewage sludge; tires and rubbers; polymeric, elastomeric materials, thermoplastics, duroplastics; bituminous or hydrocarbon impregnated sands; asphalt and tars; tar linings; contaminated soils; composite materials; Electrical and Electronic Wastes - RAEE (WEEE - Waste Electrical and Electronic Equipment); car-fluff (ASR - Automotive Shredder Residue); chemical and/or bacteriological residues of military applications. Biomasses as defined by European Directives, National and/or local Laws (e.g. European Directives 2001/77/CE, 2009/28/CE etc.) Among the environmental contaminants the following are considered as priorities: POPs (PCBs, PCDDs, PCDFs, PBBs, etc.); PAHs/PCAs; etc.

Intended "derived products" include the carbonaceous matrices with enhanced value obtained through "processes of conversion". As simple but not limiting example, "derived products" are: solids (solids as they are and/or mixed in "Cocktails") such as solid matrices and char from thermo-chemical processes as torrefaction and algal biomasses etc.); liquids (vegetable oils, oils from algal biomass, natural and/or synthetic esters, synthetic liquids, hydrocarbon oleous fractions etc.); gases (biogas, pyrolysis gas, syngas from gasification etc.).

"Bio-energetic carriers" are the biogenic carbonaceous matrices containing bioenergy at a higher energetic density with respect to the original material and that are usable as conversion intermediates in the bio-energy value chain to enhance the economic and environmental sustainability, the energetic efficiency and the logistics through applications that are performed in different times and locations. Simple but not limiting examples of bio-energetic carriers are: biomasses (lignin cellulosic, algae etc.) pre-mixed solids; torrefied solids; vegetable carbons; biogenic oils; pyrolysis bio-liquids; bio-liquids from BtL or GtL processes; Biogas; biogenic gas from pyrolysis; biogenic syngas from gasification.

CO₂-neutral - CO₂n" or "CO₂-Negative - CO₂N" is the global balance of CO2 deriving from the processes of conversion of the biogenic carbonaceous matrices that determines the "Carbon Footprint" and the interactions between different compartments of the environments and reserves ("Carbon sink") i.e. the atmosphere, the geosphere, the hydrosphere and the biosphere. CO₂ is the unit of measure to evaluate the climatic effects in terms of Global Warming Potential (GWP), known as "Greenhouse Effect" in accordance with the protocols of the United Nations Environmental Program (UNEP). A simple but not limiting example, of "CO₂N" is the "Carbon Sequestration", through the production and use of vegetable carbon (BioChar) as agricultural amendment and "soil improver" capable of capturing CO₂ ("CO₂ Capture") at a rate of approximately 3 kg of CO2 equivalent for per kg of Biochar.

"Zero emissions - ZE" is the global balance of emissions deriving from the processes of conversion of carbonaceous matrices obtained through recycling or the chemical or biochemical conversion of the emissions themselves into "derived products" or "bio-energetic carriers". A simple but not limiting example of "ZE" type process is the biochemical conversion of the typical combustion products (CO₂, NOₓ, particulate, ashes, etc.) as micronutrients for the cultivation of algae in waste waters deriving from preceding processes of conversion. Implementation of process leads to a self-sustained and virtuous integrated process.

### State of the technique

The plants and the processes for the conversion of carbonaceous matrices must comply with the requisites prescribed standards in particular to:
a. "Best Available Techniques" -BAT i.e. Directive 96/61/EC concerning integrated pollution prevention and control";
b. "Best Environmental Practices - BEP , Stockholm Convention of 22.05.2001 - POPs Persistent Organic Pollutants);
c. Prevention and reduction of the global impact on the environment (UNEP - United Nations Environment Programme; IPCC - Intergovernmental Panel on Climate Change, etc.);
d. GHG Green House Gases - ISO 14064 Part 1, 2, 3:2006;
e. Regulation (EC) N. 1907/2006 of the European Parliament and Council of 18 December 2006 - REACH (Registration, Evaluation and Authorization of Chemicals);
f. Directive 2006/42/EC of 17/5/2006 (New Machinery Directive);
g. Guideline for Safe and Eco-friendly Biomass Gasification - Intelligent Energy for Europe programme EIE/06/078/SI2.447511;
h. ATEX (Atmospheres ed Explosibles), FMEA (Failures Mode and Defect Analysis), HAZOP (HAZard and OPerability analysis), etc.

Within the State of the Art, the patents, the plants and the processes indicated below are significant.

In EP0675748 A1 (priority 24.12.1992) - W. Tumiatti - "Process for the chemical decomposition of halogenated organic compounds" by Sea Marconi Technologies di Vander Tumiatti S.a.s.. This patent, designated as CDP Process®, has been indicated as BAT for the decontamination of electric transformers and/or electrical equipment from PCBs (Italian Ministry of the Environment with Ministerial Decree 29.01.2007).

In WO97/07858 priority 25.08.1995) - W. Tumiatti, S. Kapila - "Process for the decontamination and treatment with oxidative counterflow of liquid, gaseous or solid matrix." by Sea Marconi Technologies di Vander Tumiatti S.a.s.. a conversion process of carbonaceous matrices by an oxidising counterflow in a mobile flame front and its gasification is described.

In US2010136463 A1 (priority 18.04.2000) - Tao Tao T., Bai Wei - "An electrochemical device and methods for energy conversion" - by Celltech Power, Inc. a device for electrochemical conversion that can operate both as a fuel cell and a battery is described. The basic characteristic of the device is the chemically rechargeable anode, in particular where the anode includes a liquid that can be metal or an alloy of metals, operating at temperatures from 300 up to 1500°C.

In EP 1354172 A1 (priority 19.12.2000) - V. Tumiatti, A. Hornung et al -"Plant for thermal treatment of material and operation process thereof' by Sea Marconi Technologies di Vander Tumiatti S.a.s., designated as HALOCLEAN®, a reactor equipped with screw, in which thermally conductive bodies are sent together with carbonaceous matrix is claimed. Thermally conductive bodies are metal, ceramic and SiC spheres etc. Mainly, they have the function of keeping the internal surface of the reactor and the screw clean. HALOCLEAN® has been indicated as BAT for the conversion and/or decontamination of materials contaminated by PCBs (Italian Ministry of the Environment with Ministerial Decree 29.01.2007). In its applications (i.e. WEEE, biomasses, etc.) Haloclean® is considered as the pioneer of "Intermediate Pyrolysis".

In CA2351892 A1 (priority 29.06.2001) - Peter B. Fransham - "Process for the conversion of carbonaceous feedstock into liquid, char and gas" is described. The process is based on a tubular reactor in which the conversion of a hydrocarbon feedstock material into a liquid, solid and gaseous pyrolysis product, where the heat is provided by thermally conductive bodies.

In WO2005018841 A2 (priority 4.08.2003) - G. Poulleau, P. Colignon et al. - "Thermolyse de dechets organiques en four a billes" by Finaxo Environnement the process, the plant and the application relative to the thermolysis of organic wastes in a sphere type oven are described.

In DE102005037917 A1 (priority 11.08.2005) - E. Henrich, E. Dinjus et al. - "Verfahren zur Schnellpyrolyse von Lignocellulose" by Forschungszentrum Karlsruhe GmbH a fast pyrolysis process of lignin cellulosic materials is described.

In WO2007113311 A1 (priority 05.04.2006) - T.Steer - "Wärmerohr, Heatpipe-Reformer mit einem solchen Wärmerohr und Verfahren zum Betreiben eines solchen Heatpipe-Reformers" by BioAge GmbH. A reactor equipped with "heat pipe" having inside a transportation carrier of heat for gasification is claimed.

In FR0602974 (priority 05.04.2006) - P. Daverat, N. Millet - "Procédé de production d'ènergie électrique a partir de biomasse" by Société Eneria. A plant for the thermo-chemical conversion of biomasses, including stages of drying, gasification, gas treatment by scrubbing with oil and water and co-generation with gas engine is described.

In EP2016159 A2 (priority 24.04.2006) - D. Schillingmann - "Biomassevergaser und Verfahren zur allothermen Vergasung von Biomasse" di D.Schillingmann (REW - Regenerative Energie Wirtschaftssysteme GmbH. Gasification for biomass for the pyrolysis and/or partial gasification with the purpose of producing fuel gas or a mixture of fuel gases is described.

In WO2008005476 A2 (priority 06.07.2006) - P. Badger, P. Fransham - "Method and system for accomplishing flash or fast pyrolysis with carbonaceous materials". A system comprised of dryer, pyrolysis reactor, char and thermal carriers separator, condenser and char burner for the production of energy, chemical products and other materials is described.

In US2010209965 A1 (priority 17.07.2006) - Paul O'Connor - "Catalytic Pyrolysis of Fine Particulate Biomass, and Method for Reducing the Particle Size of Solid Biomass Particles". A process for the thermal conversion of particle carbonaceous material as a source of energy into a particular fine particulate biomass is described.

In WO2008092557 A2 (priority 1.02.2007) - A. Hornung, H. Seifert, A. Apfelbacher - "Verfahren und Vorrichtung zur Umwandlung von Biomasse in Kraftstoff" by Forschungszentrum Karlsruhe GmbH. A process and a plant for the conversion into fuel of biomasses such as oil containing seeds and in particular rape seeds and/or their derivative pressing products is described.

In WO2009074268 A1 (priority 11.12.2007) - A. Hornung, H. Seifert - "Pyrolysesystem für kohlenstoffhaltige Einsatzstoffe" by Forschungszentrum Karlsruhe GmbH. A pyrolysis system for carbonaceous materials composed of a pyrolysis reactor and a heating section of the thermally conductive particles circulating in the plant is described.

In WO2009138757 A2 (priority 14.05.2008) - A. Hornung, A. Apfelbacher "Thermal Treatment of Biomass" by Aston University (UK). A process for the pyrolysis and gasification in which the biomass is mixed with a heat transmitter and transported by a system of screws is described.

In WO2009081362 A1 (priority 20.12.2007) - S. Musso, M. Zanetti, A. Tagliaferro, M.P. Luda - "Procedimento di riciclo di materiali plastici di scarto con produzione di nanotubi di carbonio" by Politecnico of Turin. A process including a pyrolysis stage of plastic materials and a conversion stage of pyrolysis gaseous products into carbon nanotubes is described.

In WO2009138746 A1 (priority 14.05.2008) - A. Hornung, A. Apfelbacher - "Biomass Processing" by Aston University (UK). A treatment process based on biomasses and in particular algae is described.

In WO2010113129 A2 (priority 31.03.2009) - M. Garbero, P. Ottonello et al. - "Improved biomass pre-treatment process" by Chemtex Italia S.r.l. A pre-treatment process of biomasses, in particular Arundo Donax and Sorghum, through phases of soaking, separation and "Steam Explosion - SE" of solid matrices with the purpose of obtaining bio-energetic carriers for the subsequent conversions into biofuels by enzymatic hydrolysis is described.

In WO2010130988 A1 (priority 11.5.2009) - A. Hornung, A. Apfelbacher - "Staged biomass pyrolysis process and apparatus" by Aston University (UK. A multiple stage process including pre-treatment and pyrolysis process of biomasses.

DE-380 035 describes a process for the distillation of solid fuels done by a cylindrical rotating reactor that is open at the two ends: DE-380 035 criticizes, in fact, design solutions in which a cylindrical reactor is equipped with sealings at the two ends, dissuading irrefutably engineers in this sector to develop a reactor closed at the two ends. Also, the plant described in DE-380 035 includes only heating means of a thermally conductive carrier introduced into the reactor, excluding the presence of direct heating means of the reactor and without explaining that the internal screw is stationary with respect to the body of the reactor.

EP-0 086 488 describes a rotary kiln only a part of which is enclosed in a heating stationary housing, thus being fundamentally different from a rotary reactor fully enclosed by a stationary housing.

US-2 723 226 describes a low temperature carbonization process using a rotary reactor in which the ends protrude outside a stationary housing, so it is fundamentally different from a rotary reactor fully enclosed by a stationary housing. Moreover, such reactor does not described the presence of a feeding conduit inside it for a thermally conductive carrier in addition to the feeding conduit for the material to be carbonized.

A plant in Güssing (Austria) uses a allothermal thermo-chemical conversion process based on dual fluidised bed gasification technology (FICFB - Fast Internally Circulating Fluidised Bed) in which the heat transfer medium is sand. This plant represents the "State of the Art" in the gasification of biomasses with efficiencies up to 81 %, off which 25 % is used for as electric power generation (∼2 MW). The plant operation has been validated with availability exceeding 7500hours/year.

The performance of plants for conversion of carbonaceous matrices cited above is based on Life Cycle Management and operational experience. These represent some critical factors, described hereafter, in the case of pyrolysis and/or pyrogasification using thermally conductive bodies.

Critical factor I - "Explosion and/or fire" - This criticality is induced by the explosive atmosphere that can be triggered when abnormal concentrations of oxygen and/or air are present in one or more sub-systems of the plant. This condition typically results from the lack of proper sealing and/or inefficient compartmenting of the reaction atmosphere with respect to the external atmosphere. The triggering may also occur due to uncontrolled exothermal reactions, reversible or permanent seizing (e.g. screw - heating body - external fixed cylinder) of mechanical components with moving interfaces that can generate localised overheating and very high temperatures and/or deformation with wear and/or damaging of transmission shafts and/or revolving and fixed seals. This risk can also develop during the periodic starting, shutting-down and emergency phases, when the plant goes through the lower explosion limit (LEL) and upper explosion limit (UEL) conditions. The limit concentration of oxygen depends upon the composition of the gas produced, humidity, temperature and pressure. For H₂ and CO at ambient temperature and pressure, the limit concentration is 4%.

Critical factor II - "Irreversible seizing with blocking of the plant" - This criticality is characterised by the seizing between the transport components (e.g. screw) and the inner surface of the reactor/s when relative movements among contiguous parts are present. This criticality can trigger in case thermally conductive bodies made of hard materials are present. These bodies, for example metal spheres, can get lodged in the interspaces between contiguous moving components resulting in irreversible seizing.

Critical factor III - "Wear, friction corrosion " - This criticality is characterised by wears, scratching and/or reversible seizing, that in practical operations, can be correlated to the transportation of the material by the screw and cylinder of the fixed or rotating reactor, i.e. when relative motions between the two components is present. Results are similar to those of Critical Factor II, but with a lower intensity. Irreversible corrosive phenomena of the metals can occur in presence of atmospheres rich in CO, CO₂ and other gaseous compounds containing Carbon when operating in the temperatures range from 350°C up to 800°C. These phenomena, designated as "metal dusting" cause the pulverisation of steel surfaces at to the point of contact leading to progressive deterioration of structural parts eventually causing their collapse.

Critical factor IV - "Thermal exchange inefficiency" - This criticality is characterised by heating inefficiencies due to low surfaces available for heat transfer between the heating parts and matrices. Thermal inefficiency can also be amplified by inefficient recoveries of energy inside the plant.

Critical factor V - "Insufficient revolving and/or static gas sealings" - In the patents cited above, the extraction of air/oxygen potentially present in the pyrolysis reactor has been claimed, without providing precise technical indications on how the compartmenting of the reactor itself is occurring. Also, the type and the number of levels of compartmenting implemented by appropriate and reliable solutions capable of guaranteeing the absence of oxygen and the sealing of gases inside the reactor with respect to the external atmosphere are not mentioned.

Critical factor VI - "Lack of mixing" - The thermal profile can result from lack of thorough mixing of the carbonaceous matrix or inhomogeneous or lack of thorough interaction between the metal heating bodies and the carbonaceous matrix in the reactor. In effect, from an operational point of view, in the patents cited above mixing the material to be treated with the metal heating bodies and the movement of the screw is at best marginal, whereas it is predominant in the transportation function with the material that under the effect of gravity, remains at the bottom of the reactor.

Critical factor VII - "Lack of milling" - The thermo-chemical conversion of carbonaceous matrices can be negligible or inefficient due to the lack of an energetic milling action of the material to be treated. Energetic milling is capable of increasing the exchange surface and enhancing intimate contact which in turn reduces the conversion time, the inhomogeneity of conversion and increase capability to promote reactions triggered by properly formulated additives. The patents cited above recognize the importance of such requisite in terms of minimal particle dimensions but do not indicate any "milling" function and the operation practice demonstrates that a rotary furnace and/or a simple screw do not provide the dynamic conditions required to reach fragmentation. In fact, under the effect of gravity the material and the metal heating bodies remain resting on the bottom of the reactor.

Critical factor VIII - "Lack of catalytic effect" - The catalytic action of the thermally conductive bodies has not been addressed in majority of the patents cited above. The use of metals or specific additives with a catalytic actions would make the conversion process more efficient and safe at a lower temperature, in shorter times and with an efficient conversion of undesired by-products, however, such catalytic action has not been claimed.

Critical factor IX - "Lack of operational flexibility, compactness and modularity" - The claims in the patents cited above do not cover the operational flexibility, compactness and modularity for possible varied applications previously described in the points of the field of application. In the typical pyrolysis and/or pyrogasification reactors process discontinuities are created by the lack of feeding that cannot guarantee the conditions of homogeneity of the chemical-physical characteristics (i.e. humidity, particle size uniformity, etc.) of the carbonaceous matrices to be converted. To process heterogeneous carbonaceous matrices, the processes of conversion must provide the synergic combination of the operational parameters aimed at better valorisation of solid matrices (i.e. production of torrefied biomass, biochar etc.) liquid matrices (pyrolysis liquid) and gaseous matrices (syngas).

Critical factor X - "Lack or inefficient conversion and abatement of POPs and/or tars formation and release, neutralisation of gases and/or minimisation of greenhouse effect - GWP. During the production of combustible gases (syngas) one of the most significant critical factor for many applications is the tar (high viscosity by-product of the pyrogasification). Tars are comprised of a wide spectrum of organic compounds, generally with several aromatic rings - PCAs etc. Viscous and insoluble tars tend to clog the ducts and indeed represent the true "Achilles heel" in these plants and cogeneration systems (i.e. gas engines, turbines etc.). Another typical critical compound present in syngas produced by biomasses, besides NOₓs, is ammonia NH₃.

### Compendium of the invention

The scope of this invention is to provide a plant capable of performing several integrated processes for conversion of carbonaceous matrices in compliance with the set requirements in the field of application and free from the troubles and critical factors that have not been recognised in the current plants.
This scope is achieved through the modular plant concept with the characteristics indicated in claim 1 here after. The preferred characteristics of the plant and of the invention are indicated in the depending claims from 2 through 16. Among the critical aspects of the plant, it is pointed out that it comprises a fully enclosed rotary reactor, except for the presence of inlet/outlet passages for the matrix and the thermally conductive carrier. In fact, such reactor has a substantially cylindrical central body closed at the two ends respectively by a stationary fixed head and a head fixed to the central body. Moreover, such reactor is integrally enclosed by a stationary housing and is equipped with an inlet feeding conduit for a thermally conductive carrier that is different from the feeding conduit of the matrix to be treated. The thermally conductive carrier is an integral and fundamental part of the plant in every operational phase. In fact, without the presence of this thermally conductive carrier re-circulating in the plant, the plant cannot reach the operational conditions.

### Brief description of the figures

The advantages and the features of this invention shall be self-evident from the detailed description provided hereafter, in the simplified, but not limiting title, with reference to the annexed drawings in which:
Figure 1 is a layout representation of the basic module of the modular plant described in this invention.
Figures 2a-2g illustrate respectively the layout of internal devices that can be fixed inside the rotary reactor of the basic module shown in Figure 1.

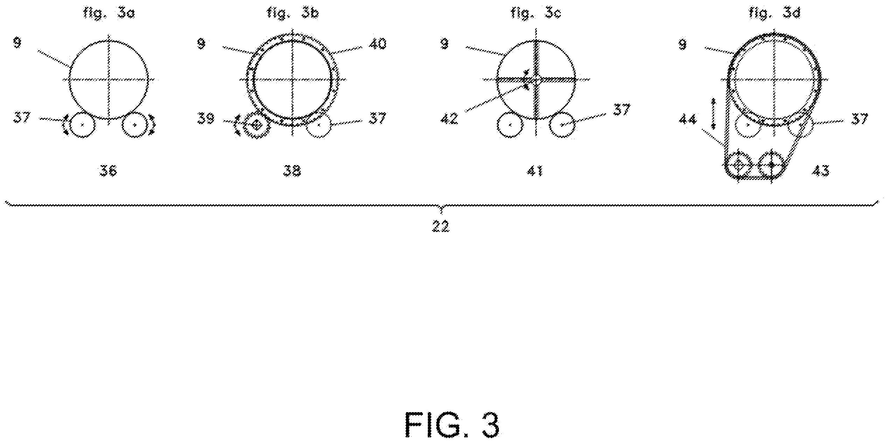

Figures 3a-3d illustrate respectively the layout of the driving modules of the basic module of the invention of Figure 1.
Figure 4 represents the layout of a possible configuration of the inside of the basic module equipped with progressive profile drawer devices.
Figure 5 represents layout of a possible configuration inside of the basic module equipped with screw with rotating distributor of liquid and/or gaseous matrices.
Figure 6 represents layout of an additional form of implementation of the basic module of the invention with a liquid as the thermally conductive carrier.
Figure 7 shows the layout of a possible controlled feeding module of the modular plant of the invention.
Figure 8 shows the general layout illustrating possible operational configurations of the modular plant of the invention.
Figure 9 shows the layout of a possible configuration of the modular plant with constituting modules placed in container for pyrogasification application.
Figure 10 shows the layout of a possible configuration of the rotors of the modules and the carbonaceous matrices feeding module inside the container for the pyrogasification application.

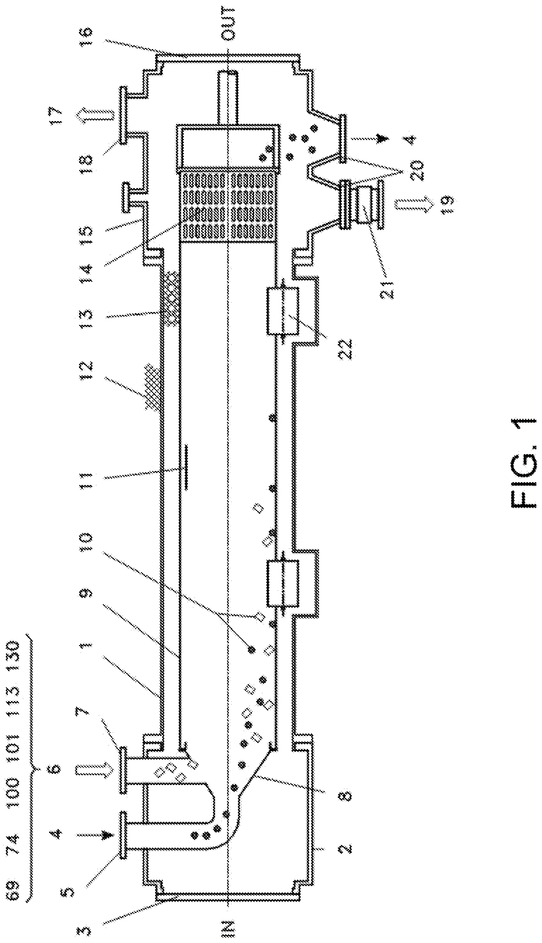

The parts, components and devices that, at simplifying title, constitute the possible configurations of the modular plant of the invention are listed here below, with sequential identification numbers:
1. Casing or stationary body housing enclosing the controlled atmosphere reaction zone, including the two interface ends, of materials compatible with the conditions of the process.
2. Feeding interface end (Input End) with stationary sealing system.
3. Flange and sealing system for accessibility and maintenance on the Input End.
4. Spheres and/or thermally conductive bodies and/or carriers.
5. Interface and loading conduit of the spheres and/or thermally conductive bodies and/or carriers.
6. Generic carbonaceous matrix to be converted entering the rotary reactor selected from among 69, 74, 100, 101, 113, 130 for different typologies and/or operational phases of the different conversion processes (see Figures 1, 7 and 8).
7. Interface and loading conduit for the carbonaceous matrix to be converted.
8. Stationary head - feeding conveyor of the rotor.
9. Rotary reactor or process rotor.
10. Hyper-dynamic mobile bed constituted by spheres and/or bodies and/or thermally conductive carriers 4 and generic carbonaceous matrix to be converted 6.
11. Internal devices of the rotor.
12. External or internal thermal insulation or possibly sound-proofing.
13. Electric heating device for start up/shutting down and emergency phases.
14. Possible sifting grid section (spheres and/or thermally conductive bodies - converted solid matrices).
15. Exit interface end (Output end) with stationary sealing system and interface for safety device against explosion and/or fire.
16. Flange and sealing system for accessibility and maintenance on the Output end.
17. Converted carbonaceous matrix light fraction (liquid and/or gaseous).
18. Gaseous or liquid fractions interface and exit conduit.
19. Converted carbonaceous matrix heavy fraction.
20. Converted carbonaceous matrix heavy fraction (solid and/or liquid) interfaces and exit conduit 19 and spheres and/or bodies and/or thermally conductive bodies 4.
21. Optional chamber with concentrated irradiation device (ultrasounds, microwaves, radio frequency and/or electromagnetic fields).
22. Rotor drive and support assembly.
23. Drawer device optional winglet and/or ploughshare profile.
24. Ploughshare device with possible internal bay.
25. Winged device.
26. Solid or perforated Archimedean screw with solid or hollow shaft for the process fluids input.
27. Solid or perforated spiral.
28. Basket device containing filler bodies, with or without high catalytic surface.
29. Spiral device with rotary distributor 31 for gaseous and/or liquid matrices.
30. Gaseous and/or liquid matrices injectors.
31. Gaseous and/or liquid matrices rotary distributor.
32. Rotary part.
33. Inlet for process fluids (example: air, oxygen, steam, extraction solvents etc.).
34. Rotating seal.
35. Fixed part.
36. Group of motorized and synchronized longitudinal rollers.
37. Longitudinal support rollers.
38. Group with pinion-crown gear transmission and roller support.
39. Pinion.
40. Crown gear.
41. Group with prop-shaft and roller support.
42. Prop-shaft.
43. Transmission group with single or dual chain and roller support.
44. Transmission member.
45. Feeding device for generic carbonaceous matrix 6.
46. Molten metal topping-up and/or injection of oxidizing agents and liquid and gaseous matrices.
47. Interface for filling molten metal and/or oxidizing agents and liquid and gaseous matrices.
48. Rotor stationary feeding head with holes for the passage of circulating molten metal.
49. Molten metal level.
50. Molten metal.
51. Wings for the internal circulation of molten metal.
52. Passage chamber for the hot gases flowing along the properly winged external wall of the housing.
53. Rotor driving group with hollow shaft and spokes fixed to the rotor.
54. Optional pipe heat exchanger inside the molten metal bath.
55. Cathode constituted by a bundle of pipes in ceramic material (YSZ) and provided with a superficial layer of Nickel alloy (Ni-YSZ).
56. An optional frictional device for liquid proof installation of heat exchanger 54 or the cathode 55.
57. Combustion hot gases and/or hot air for the heating of housing 1 from the outside and/or addition of oxygen through cathode 55.
58. Lighter fraction liquids and/or gaseous from converted carbonaceous matrices interface.
59. Exit interface 58 for converted gaseous and/or liquid from carbonaceous matrices.
60. Solid carbonaceous matrices and ashes.
61. Exit interface for solid carbonaceous matrices and ashes 60.
62. Molten metal draining flange 50.
63. Skimming device for asses 60.
64. Metal oxides reduction and conversion chamber with concentrated irradiation device (microwaves, radio frequency (RF), electromagnetic fields and/or power laser).
65. Internal and external thermal insulation and sound proofing.
66. IN - Heterogeneous solid carbonaceous matrices prior to be pre-treated.
67. Dosing from silos of heterogeneous solid carbonaceous matrices without pre treatment 66.
68. Transportation of heterogeneous solid carbonaceous matrices without pre-treatment 66.
69. Pre-mixed heterogeneous solid carbonaceous matrix to be pre-treated - humid cocktail.
70. Reactor based upon the basic module for the formulation of "cocktails", drying and pre-treatment.
71. Hot gaseous flow for drying from possible energy recovery from modules located after module A 102.
72. Watery matrix recovered from drying.
73. Dried homogeneous solid carbonaceous matrix to be treated;
74. IN - Homogeneous solid carbonaceous matrix with low water content to be treated and/or converted.
75. Transportation and dosing screw of homogeneous solid carbonaceous matrix with low water content to be treated 73 and 74.
76. Controlled atmosphere isolation valves.
77. Additives and/or catalysts; conservation and/or protective and/or bactericide; anti-mildew and/or fungicide agents that can be added.
78. Loading hoppers for carbonaceous matrix 73 74 and additives and/or catalysers 77.
79. Transportation and dosing screw for additives and/or catalysers 77.
80. Controlled atmosphere isolation valves.
81. Mixing hopper for the homogenization of the carbonaceous matrix to be converted with additives and/or catalysts 77.
82. Optional mixing organ device.
83. Transfer Archimedean screw for the solid carbonaceous matrix 73 and/or 74 and/or additives/catalysts 77 possibly with a variable profile.
84. Optional heating zone with integration of concentrated irradiation device (microwaves, radio frequency and/or electromagnetic fields).
85. Optional vacuum assembly.
86. Solid carbonaceous matrix for obtaining products (Coke and Bio-coke 126) to be stabilized and packaged in module N 103.
87. Self-cleaning feeding pusher.
88. Pusher driving assembly.
89. Actuation by rod/crank.
90. Actuation by piston.
91. Actuation by pinion/rack.
92. Interface for inlet of solid carbonaceous matrices.
93. Interface for inlet of liquid and/or viscous carbonaceous matrices to be reconverted 121.
94. Thermal head with optional wings.
95. Restrictor.
96. Variable pitch feeding screw.
97. Feeding screw drive assembly.
98. Speed reduction mechanism.
99. Thermal head with optional wings.
100. Compacted and pre-heated solid carbonaceous matrix for direct injection and conversion in the rotary reactor 9.
101. Input - Homogenous solid, liquid and gaseous carbonaceous matrices for multi-phase process such as conversion (extraction, decontamination, catalysis, etc).
102. Module A - controlled feeding, "cocktail" and pre-treatment of carbonaceous matrices.
103. Module N - stabilization and packaging of solids.
104. Watery matrix recovered from pre-drying. (Optional).
105. Module B - Selective extraction and/or multi-phase conversion.
106. Secondary - intermediate biogenic solid from extraction.
107. Residual - intermediate algal biomass from extraction.
108. Output - Products and derived bio-products (liquid, solid and gaseous) from extraction and/or decontamination (Hydrocarbons, Mineral Oils, Vegetable Oils; Natural Esters etc.) and glycerine.
109. Module C - Hyper-dynamic flexible pyrolysis.
110. Char - converted - intermediate carbonaceous matrices.
111. Output - Solid derivative bioproducts (BioTor, BioChar, Activated carbon, BioActCoal, etc).
112. Output - Carbon black - converted carbonaceous matrices.
113. Converted - intermediate volatile carbonaceous matrices for subsequent conversion in modules F 118 and G 122.
114. Module D - Heating and/or sub-stoichiometric oxidation.
115. Ashes and micronutrients - intermediate.
116. Module E - Catalytic pyrogasification with molten metal.
117. Pyrolysis liquids - (BioPyroLiq, PyroLiq) - Liquid carbonaceous matrix converted by pyrolysis.
118. Module F - Hyper-dynamic catalytic gasification.
119. Oxygen from cultivation of algae.
120. Syngas - gaseous carbonaceous matrix converted by catalytic gasification.
121. Carbonaceous matrices to be re-converted - intermediate for derivative product 117 and for subsequent conversion in module A 102.
122. Module G - integrated gas treatment.
123. Watery matrices - intermediate.
124. Output - Biosyngas, Syngas, BioPyroGas, PyroGas - converted carbonaceous matrices.
125. Syngas - intermediate converted carbonaceous matrices;
126. Output - Cocktail of solid carbonaceous matrices (BioCok, Cok).
127. Module H - Photo bio reactor for microalgae.
128. Natural and/or artificial light energy.
129. Exhaust gases (CO₂, NOₓ, etc.) from conversion of carbonaceous matrices.
130. Biogenic carbonaceous matrix - Algal biomass as is - intermediate for subsequent conversion in modules A 102 and B 105.
131. Module L - Cogeneration group (CHP).
132. Output - Energy & Bioenergy (electric, thermal, refrigerating) for "Smart Grids".
133. Module I - interface for various modules.
134. Module M - microGTL (Fischer-Tropsch).
135. Primary algal biomass.
136. Output BioAlg - primary algal biomass (dried and/or lyophilised) in module N 103.
137. Output Liquids FT - Bio liquids from Fischer-Tropsch process.
138. Output Production of advanced materials (MWCNT - Carbon Multi Wall Carbon NanoTubes, etc.), Hydrogen H₂.
139. Low total emissions into the atmosphere.
140. CO₂-neutral - CO₂n.
141. CO₂-Negative - CO₂N.
142. Zero Emissions - ZE.
143. POPs/tars Free.

### Detailed description of the invention

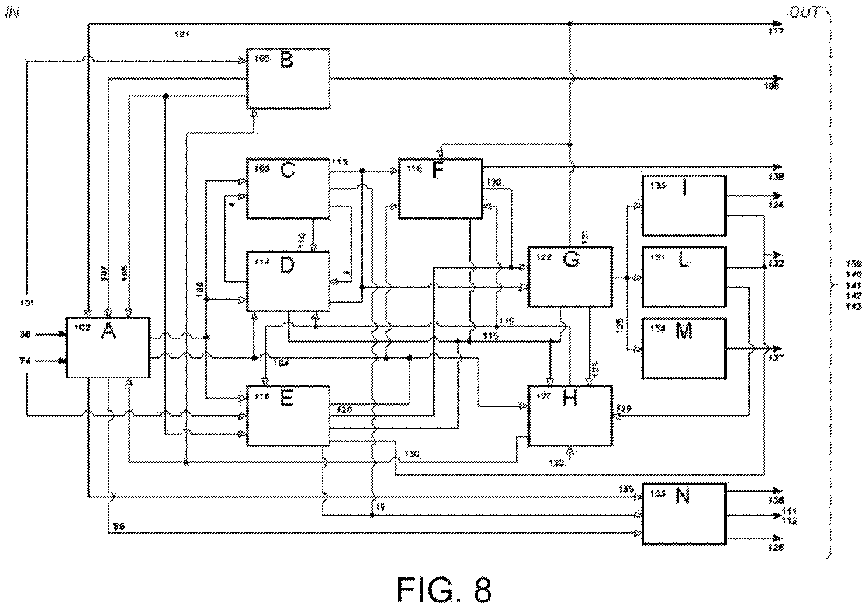

This invention relates to a modular plant capable of performing integrated processes for conversion of carbonaceous matrices into products suitable for varied applications in compliance with what indicated in the field of application and in its scope. As a simple, but not limiting title, is possible to obtain more effectively and simultaneously one or more "derived products". Products can be "energetic or bio-energetic carriers", "energy or bio-energy" (see Figure 8) as described below in the various modules A, B, C, D, E, F, G, H, I, L, M and N. The assembly of modular plant suitable for conversion of carbonaceous substrates for varied applications is accomplished by the integration of several "basic models". The "basic module" (shown in Figure 1) satisfies the priority requisite of "Zero risk of seizing and low friction wear and absence of contiguous parts with relative motions" in rotor 9. The basic module is also free from critical factors II and III, which and can be operated at temperature ranging from -200°C to 1200°C, at pressures ranging from 0.1 mbar up to 100 bar in continuous or discontinued mode. The basic module is comprised of (at least in part) one or more of the following elements. A rotary reactor or a process reactor 9 (hereafter designated as "rotor" 9) around a central longitudinal axis having an inclination from 0° through 45° with respect to an horizontal plane having a largely substantially tubular central body, with a circular or polygonal cross-section with a diameter over length ratio of up to 1:15, closed by a first fixed head 8 feeding rotor 9, consisting of a conveyor preferably rotary sealed in the interface with the terminal side of rotor 9 and a second head fixed to the body that can be of smooth or equipped with sifting section 14 for the separation of thermally conductive carriers 4 from the generic carbonaceous matrix to be converted 6. One end of the body with fixed head for sealable separate introduction of the generic carbonaceous matrix to be converted 6 and the thermally conductive carriers 4. The first conduit 7 in the fixed head is the inlet for generic carbonaceous matrix to be converted 6 into the reactor and the second conduit 5 is the inlet of thermally conductive carrier 4 into the reactor. Rotor 9 is equipped on the integral head with securing points for the specific internal devices 11 29 capable of creating conversion bed 10 formed by thermally conductive carriers 4 and the generic carbonaceous matrix 6 intimately in contact between them. The housing or fixed body 1 including ends 2 and 15 is made of material compatible with the process conditions. The design guarantees the sealing of the reaction atmosphere with respect to the external ambient. The housing is covered with a thermal and sound proofing layer 12. A heating device 13 facing the cylindrical reactor can be installed inside the proofing layer. Such heating device is used during the starting/shutting-down or emergency conditions. At the ends 2 15 of fixed housing 1 are equipped respectively with flanges 3 16 for an easy access and maintenance: in particular, end 15 is equipped with interface for a safety device to prevent explosions and/or fire. The devices include sensors for monitoring concentrations of gases and, when required, for introduction of an inert shielding gas into an expansion chamber. Housing 1 is also provided with openings for the passage of heavy fraction derived from the converted carbonaceous matrices 19, for the passage of thermally conductive carriers 4 through the interface and conduit 20. As well as opening for the passage of liquid and/or gaseous light fraction derived from converted carbonaceous matrices 17. The rotation drive and support group 22 of said reactor is located inside fixed housing 1 and is without internal mechanisms having a relative rotary motion with respect to said cylindrical body 9. The said thermally conductive carriers 4 are comprised of a plurality of solid bodies, in particular metal spheres, or by a liquid chosen from the group consisting of molten metals 50 and/or alloys thereof, molten salts, liquefied cryogenic fluids and liquid substances at ambient temperature, such oils, single or multiphase aqueous solutions and organic fluids. Preferably, the spheres can be of metal base and/or its alloys (i.e. special alloy steel and/or with strong catalytic action - based on Ni, Cr, Fe, Mn, Co, Ti, etc.), but also SiC and/or other ceramic materials and/or ((Mg, Fe)₂SiO₄) and/or activated allumina, Silica, natural or synthetic zeolites, etc. with various compositions compatible with the thermal and mechanical stresses and the corrosive nature of the conversion atmosphere. The thermally conductive bodies 4 can be spherical or not, with functionalized surface of dimensions from 0.5mm up to 100mm, but preferably from 10 to 25mm when involving steel spheres, selectively used, properly heated/cooled to operate over temperatures ranging from -200°C up to +1000°C. In case a liquid state metal (molten metal) is chosen, preferably they are Sn, Bi, Zn, Pb and A1 and/or alloys thereof with metals with catalytic effect (i.e. Fe, Ni, Cr, Mn, Co, Ti, etc.), directly or indirectly heated/cooled by thermal exchange with another fluid. The thermally conductive carriers compatible with the applications can be: cryogenic fluids down to -200°C (i.e. liquid nitrogen, liquid air, etc.) aqueous solutions with suspended solids from -5 up to +90°C, mineral base oil, natural and/or synthetic esters, polyethylene glycols and polypropylene glycols and their mixtures, silicon and/or fluoridated fluids from -40°C to +320°C, molten salts and/or their mixtures with melting temperature up to 550°C, molten metals and/or alloys thereof with melting temperature up to +1200°C.

The thermally conductive carriers are heated or cooled in a continuous and closed-loop mode through contiguous reactor with the characteristics in accordance with claims 1 and 2.

In the case of thermo-chemical processes (torrefaction, pyrolysis and/or pyrogasification, etc.) the energy supply can be directly provided by the selective oxidation (partial or complete) of one fraction the carbonaceous matrices or one or more of the carbonaceous matrices produced 110 in the main reactor. In this manner the matrix itself is further converted in a confined and closed-circuit contiguous reactor with the possibility of creating a self-cleaning and self-sustained process from energy point of view.

Rotor 9 is equipped with appropriate securing points where an internal device 11 capable of interacting with said carbonaceous matrix to be converted 6 is fixed. The said thermally conductive carrier 4 be able to prevent irreversible seizing with the blocking of the plant (Critical factor II). The internal devices can be preferably of the simple drawer type 23 or with a progressive profile, ploughshare 24, wings 25, solid or perforated screw 26, solid or perforated spiral 27, or basket type containing the catalytic surface filling bodies 28. In the case of solid or perforated screw 26, it can be equipped with solid or hollow shaft possibly perforated for the injection of process fluids coming from an appropriate rotating head inlet. On each rotor 9 one or more internal devices are integrated. The devices are configured in different typologies optimized performance of the conversion processes referred to in the field of application and its scope.

Devices such as drawers 23, ploughshare 24 and wings 25 are fastened in a secure manner preferably with bars, in a quantity exceeding 2, going across the single devices being secured to the ends of rotor 9. The bars provide for an easy installation and removal of the internal devices and constitute the guides for the insertion of simple spacers and possibly of curved containment shields of the reaction bed for the mechanical and anti-wear protection of the internal surface of rotor 9.

This configuration surprisingly provides a "Zero risk of seizing" condition since no component with relative motions between them are present inside rotor 9 that, considering the interaction of thermally conductive carriers such as metal spheres 4, cause abnormal wear on structural parts of the plant and irreversible seizing (see Critical factor II). Internal devices 11 that are most prone higher wear, are made with easily removable parts and considered "expendable" materials and protect the structure of the rotor against excessive wear and corrosion (Critical factor III).

In case specific internal devices are used, hyper-dynamic conditions can be realized in the bed comprised of generic carbonaceous matrix to be converted 6 and metal spheres and/or bodies and/or thermally conductive carriers 4 through the synergic action between one or more of the following functions simultaneously or sequentially: I - transfer or dissipation of heat ("transfer"); II - transportation of material ("transport"); III - mixing of material ("mixing"); IV - crushing of material ("milling"); V - catalytic action ("catalytic action").

With the adoption of one or more drawer devices 23 or ploughshare 24 or other devices with progressive profile it is possible to create the conversion conditions at hyper-dynamic state based upon the combined action of all the elements that can individually realize a triple effect: a - "mixing" produced by its insertion into the bed and lateral shifting of the particle mass; b - 2 "scooping or spooning" of an aliquot of the bed with transfer upward; c - "milling" by dropping from the highest position of the bed maximizing the kinetic effect. The spiral internal device 27 equipped with injectors 30 associated with the rotary distributor 31 for process fluid realized with a gas sealing system through fixed head 16. It is fixed to rotor 9 and is capable of providing the longitudinally and synchronized inlet of said process fluid 33 in the conversion zone inside rotor 9. This device is essentially comprised of: a fixed part 35 where the oxidizing agents and/or process fluids 33 required for the conversion reaction/s are introduced; a rotating seal 34 inserted between the fixed part and the rotating part ensuring the sealing; a rotary part 32. The process fluids 33, in case of oxidation or gasification of the carbonaceous matrix, are composed of air, oxygen and/or steam, whereas in the case of other processes such as for example "Steam Explosion - SE" it could be just saturated steam.

Rotor 9 includes a drive and support group including at least one component chosen from among longitudinal rollers 37, motorized and synchronized 36 interacting by friction with the external surface of the body of rotor 9, a motorized pinion 39 engaging a ring gear secured to rotor 40, a motorized shaft mounted outside the mobile head in correspondence with the longitudinal axis and a flexible element, such as a belt or chain 44 connecting a drive shaft to an external surface of the reactor body. The drive groups can be chosen in relation to the application among the possible drive and support configurations 36, 38, 41, 43. To ensure the sealing in the drive shaft and in the rotation shaft of the rollers with appropriate rotating safety packing seals are provided these can be continuously flushed and monitored. Rotor 9 can also perform both functions i.e. driving component and providing the structural support. In addition a characteristic of rotor 9 is the low torque activation requirement and which in turn leads to a lower energy consumption and a limited wear.

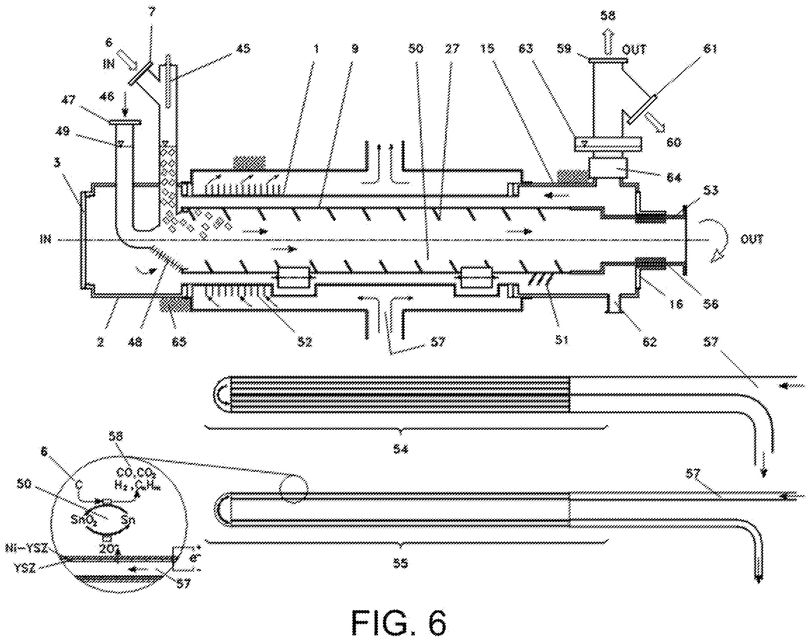

For applications where a molten metal or alloy of metals is used as the thermally conductive carrier over a temperature range from 250°C up to 1200°C and higher, the rotor 9 is totally or partially comprised of the following elements (as indicated in Figure 6): rotor 9 driven, possibly, by hollow shaft and spikes 53 equipped with internal devices 27 spiral or winged type and external wings 51 for the re-circulation of molten metal 46; reaction ambient fixed containment housing 1; inlet interface end 2 with fixed sealing flange 3; interface and conduit 47 for the inlet of molten metal 46 and/or alloys thereof; pusher (or screw) actuated inlet device 45 for the generic carbonaceous matrix to be converted 6; locking-proof loading cone 48 with holes for the passage of circulating molten metal 46; winged passage chamber 52 for hot gases 57 for energy supply; exit interface end 15 with fixed sealing system and flange 16 for maintenance and possibly packing seal 56 for the installation of pipe bundle heat exchanger 54 in metal material or a cathode 55 constituted essentially by cluster of pipes (cells) of high temperature ceramic material (YSZ) and provided with a superficial layer in Nickel alloy (Ni-YSZ) both located inside the molten metal bath 50; flange and molten metal draining conduit 62; flange and exit conduit 59 of the gaseous, liquid and solid converted carbonaceous matrices 58 with flange and exit conduit 61 of ashes 60 equipped with skimming device 63; metal oxides conversion chamber and mixing with carbonaceous matrix acting as reducing agent irradiated by concentrated radiation device (microwave, radio frequency, electromagnetic fields and/or power laser) 64 to improve the regenerative conversion from metal oxide into metal; internal or external thermal insulation layer 65.

The solid carbonaceous matrix 66 74 106 107 130 to be converted can be supplied from the head directly into rotor 9 thus into the bath of molten metal 50. Possible liquids or gases can be injected from the same inlet head directly into the molten bath by the appropriate injection device 45. The separation of the ashes occurs by simple skimming 63 from the mass of molten metal.

The thermally conductive carrier, i.e. molten metal 46 is continuously thermostatically controlled by a thermostatic fluid 57 possibly produced by the combustion of part of the converted carbonaceous matrix 58 and that flows through a chamber that presents at least a part of external winged surface 52 in common with said housing 1 so that an energy self-sustained plant is created. The thermal profile in the reactor as a result is homogeneous, thus proving a better control of the conversion conditions for the carbonaceous matrix.

The modular system can provide a plurality of basic modules configured for different fields of application and interconnected among them in series or parallel, which can be arranged into one or more containers, so that the handling and installation in the desired site is facilitated. The layout for possible configurations is defined in Figure 8.

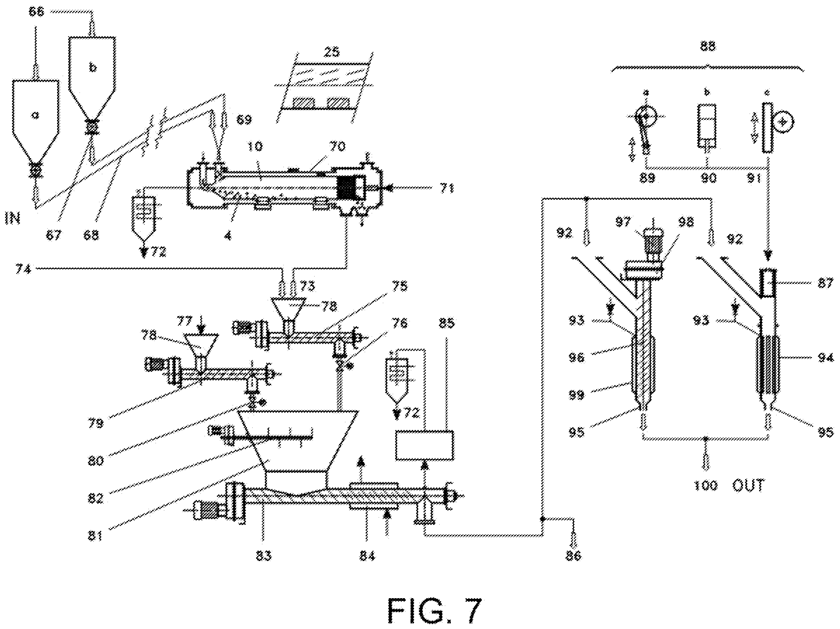

The modular plant can be configured with module A of which the main characteristics are listed in Figure 7. "Module A 102 - controlled feeding and pre-treatment, Cocktail" - it provides one or more among the key functions and/or the processes: 1 - formulation of stabilized and homogenized "Cocktail" from heterogeneous matrices as they are through mixing, pre-treatment; 2 - drying of the carbonaceous matrix; 3 - feeding of downstream reactors 109, 114 and 116 with dosing of solid, liquid and gaseous matrices to be converted; 4 - mechanical pre-treatment of solid feeding material for the reduction of volumes thus its apparent density; 5 - possible addition of additives, catalysts and/or conserving agents; 6 - feeding in controlled atmosphere for the elimination of oxygen/air thus separation/compartmenting at several levels (primary and secondary) of the reaction ambient from the external ambient; 7 - energy recovery; 8 - possible energy recovery of air and/or condensation water for reuse in the conversion processes; 9 - possible injection of liquid and/or gaseous fraction. Products emerging from module A include: single and/or premixed "Cocktail" solids for derivative products (BioCok, Cok 126) 86 and/or compacted and pre-heated 100 for direct injection into rotor 9; recovered watery matrix from drying 72. The main characteristics of the materials are: 1 - increased energy density, 2 - increased volumetric density; 3 - homogeneous granulometry; 4 - chemical-physical stability; 5 - targeted incorporation (when necessary for the type of conversion) of additives and/or specific catalysts and conserving agents (bactericides, anti-mildew and fungicides etc.). Module A is mainly composed of the following elements or devices: containers, silos and dosing systems 67 for the different typologies of heterogeneous types of carbonaceous matrices as they are 66 coming possibly from systems or devices for the appropriate dimensional reduction, by mechanical sectioning (i.e. crushing, chipping etc.) compatible with transfer devices 68 for the formulation of "Cocktails"; rotary reactor 70, fed with solid carbonaceous matrix - "Humid cocktail" 69, possibly not sealed, for the pre-treatment (drying, milling and mechanical sifting) equipped with wing moving device 25 and/or drawers 23 and possible presence of thermally conductive carriers and/or thermally conductive bodies 4 where the bed is continuously blown by a hot gaseous flow 71 in case it is necessary a pre-drying or pre-heating, preferably coming from energy recovery from the plant itself or from auxiliary integrated heating system, possibly equipped downstream with a condenser recovering drying water 72; loading hopper 78 and transportation screw 75 of the dried homogeneous solid carbonaceous matrix to be treated 73 or solid carbonaceous matrix as is at low concentration of water 74 with confinement valve of the controlled atmosphere zone 76; loading hopper 78 and transportation screw 79 for additives and/or catalysts 77 and/or possible fillers and/or preservatives and/or protectors and/or bactericides and /or anti-mildews and/or fungicide, with confinement valve of the controlled atmosphere zone 80; mixing hopper 81, possibly heated and integrated with mixing organ 82 for the homogenization of the carbonaceous matrix to be converted 73, 74 with additives and/or catalysts 77 and equipped downstream with transfer screw 83 possibly of variable profile with concentrated radiation device (microwaves, radio frequency and/or electromagnetic fields) 84; possible vacuum group 85 for the extraction of air or other gaseous fraction from the compacted carbonaceous matrix to be converted 92; possible feeding device of carbonaceous matrix 92 compacted by variable pitch feeding screw 96 equipped with thermal head 99 and restrictor 95 with possible additional introduction of liquid matrices 93 and/or impregnation; device for the inlet of carbonaceous matrix 92 compacted by pusher 87 actuated by rod/crank 89 or piston 90 or pinion/rack 91 equipped with thermal head 94 and restrictor 95 with the possible additional injection of liquid matrices 93 and/or impregnation; expulsion of the compacted and pre-heated solid carbonaceous matrix 100 for direct injection and conversion into rotor 9. In the case when the carbonaceous matrix as is presents characteristics of dimensional homogeneity and low content of water (i.e. tire granulate, granulated polymeric matrices, etc.) the drying and pre-treatment phase is not required and the dried homogeneous carbonaceous matrix to be treated 73 is fed directly into loading and dosing hopper 78. At the exit of the transfer screw of the solid carbonaceous matrix 73 and/or 74 and/or additives/catalysts 77 it can facilitate the extraction of solid carbonaceous matrix 86 for derivative product (Cok and Biocok 126) stabilized and packaged in module N 103.

The modular plant can be configured with "module B 105 - selective extraction and/or multi phase conversion - that makes reference to the basic module. Module B 105 provides one or more of the following key functions and/or processes: 1 - thermo-chemical and/or chemical-physical conversion of solid and/or liquid and/or gaseous matrices that can operate from -200°C up to 400-500°C at atmospheric or negative(vacuum) or positive pressure; 2 - separation and/or reaction with cryogenic agents of heterogeneous matrices from metals (i.e. tires, electric and electronic wastes, composite materials in general etc.); 3 - conversion of homogeneous solid, liquid and gaseous matrices for the selective extraction of compounds and/or elements (i.e. extraction of vegetable oils, oils from algal biomasses, hydrocarbons, biogenic materials such as tannins, lignin, etc.; 4 - extraction pre-treatment of substances (i.e. cellulose, hemicellulose, lignin etc.) by "Steam Explosion - SE"; 5 - selective adsorption and/or desorption of compounds and/or elements and/or active principles; 6 - decontamination, dehalogenation and chemical detoxification of POPs and other dangerous compounds through particle supports and/or interactions with liquids and/or gases as well as chemical reactions of catalysis and/or a transfer of phase with solids, liquids and gases; 7 - conversion of polypropylene and/or primary or residual polystyrene in the temperature range 300-500°C to produce high value energy liquids; 8 - conversion of residual polystyrene with monoesters at temperature up to 200°C; 9 - conversion of glycerine obtained from the transesterification into mono and di-hydric alcohols by catalytic hydrogenation; 10 - the flows of liquid and/or gaseous fractions can be in the same direction or counterflow and the operational mode continuous and/or discontinuous; 11 - catalytic dehalogenation of POPs in polypropylene bath in the range 300°C to 500°C. The rotary reactor can be configured in series (sequential) or parallel and can be positioned horizontal or sloping with an appropriate closed-loop circuit for the re-circulation of the spheres and/or thermally conductive carriers exploiting the gravity for the possible introduction of gaseous (i.e. hydrogen, oxygen, nitrogen etc.) or liquid matrices (e.g. extraction solvents etc.) through distribution device 31. Module B is fed by specific inlet device for the solid, liquid and gaseous carbonaceous matrix 101 as is for the multi-phase conversion (extraction, decontamination, catalysis etc.). From module B are mainly obtained: biogenic oils and active principles from primary algal biomass 108; secondary algal biomass 107; secondary biogenic solid 106; natural esters 108; glycerine and/or derivative biogenic liquids 108; liquids and/or gel obtained from polystyrene and/or natural esters 108; lignin and/or tannins and/or other bio-derivatives 108; concentrated extract of cellulose, hemicellulose, lignin etc, from biomass; decontaminated, detoxified technical liquids etc. 108; hydrocarbon liquids and/or gases 108; soil, sands and or decontaminated solid supports 108; harmonic steel and pulverized solid recovered from used tires; metals from electric and electronic wastes. The extraction, decontamination and/or detoxification processes can be assisted by concentrated irradiation devices (ultrasounds, microwaves, radio frequency, electromagnetic fields) 21 to reduce the times and to enhance the efficiency of the conversion processes. Vegetable oils can be obtained with the extraction processes at different temperatures and for simple mechanical action ("mixing", "milling" under hyper-dynamic conditions) even in a single stage, i.e. without separation of the shell and/or stone (i.e. Jatropha Curcas). They can be used as help for the extraction of single or sequential solvents according to different polarities possibly assisted by concentrated irradiation device 21 with extraction yields (e.g. 95% for Jatropha Curcas). The solvents can be continuously salvaged in a closed-loop circuit by a vacuum fraction distillation. The special sequential extraction process with solvents has surprisingly demonstrated the capacity of detoxifying the solid deriving from extraction of biogenic oils from Jatropha Curcas, as indicated here below in Example II of this invention. In module B, effective transesterification processes of vegetable oils and/or greases using methanol containing sodium metoxide can be realized through closed-loop re-circulation up to 60°C in the presence of thermally conductive carriers, thus under hyper-dynamic conditions in the reactor. Natural esters and glycerine are obtained. The glycerine, in particular, can be converted into biogenic material for the production of bio-liquids for use of biopolymers or bio-fuels. The glycerine can be used as is as a stabilizing agent in pyrolysis liquids 117 to mitigate their tendency to polymerization or can be subject to purification. Catalytic hydrogenation processes can convert glycerine into biogenic liquids, as indicated hereafter in Example III of this invention.

Liquids and/or gels can be obtained through conversion processes of polystyrene with temperatures up to 80-100°C with mono esters (i.e. derivatives from transesterification of vegetable oils) reducing at the same time the packaging volumes (up to 100 times and over). Tannins, active principles and extracts and/or bio-derivatives 108 can be obtained with selective extraction processes with solvents in a temperature range between 80 and 100°C possibly assisted by a concentrated irradiation device (ultrasounds, microwaves, radio frequency and/or electromagnetic fields) 21. Concentration extracts of cellulose, hemicellulose, lignin, etc. from biomass can be obtained with selective de-polymerization through "Steam Explosion - SE" with introduction of saturated steam in the range from 150°C to 220°C for a time of 1 min to 180 min. The steam is injected through rotary distributor 31 optimizing the conditions of process severity (Ro). The "Steam Explosion" process for the production of a liquid "bioenergetic carrier" can be realized by a cascade configuration with reactors equipped with appropriate devices and thermally conductive bodies, such as metal spheres, in order to improve the efficiency with hyper-dynamic conditions, at different process conditions and possibly assisted by a concentrated irradiation device (ultrasounds, microwaves, radio frequency and/or electromagnetic fields etc.) 21. Decontamination, selective depolarization (acid compounds and/or sulphurized corrosives; for example, DBDS DiBenzylDiSulphide up to < 5mg kg⁻¹) and dehalogenation and/or detoxification of technical liquids from POPs, including PCBs and PCAs, that are performed by particle supports, adsorbents, reagents and/or catalysts can be realised. The quantity of these particle supports typically up to 5% in weight with respect to the oil can be mixed with or be made of particle supports based on aluminum silicates and/or activated carbon and/or zeolites in the dimensional range from 0,5 and 5mm and in the typical ratio from 50 to 70% in weight, or constituted completely by the supports listed, together with a mixture of inorganic bases with alkaline and basic and alkaline-earths (KOH, CaO, MgO, CaCO₃) in particle formulation from 0.2 to 5 mm with high surface in the typical ratio from 10 to 20% in weight, polyalkylene glycols with high molecular weight in particle form from 0.2 to 5 mm in the typical ratio from 10 to 20% in weight, spheres and/or thermally conductive carriers with high catalytic surface in a dimensional range of 0.5 to 5mm (preferably constituted by Fe, Ni, Al, Cu, Zn and/or alloys thereof). The operational conditions are in hyper-dynamic state in a temperature range from 50°C to 200°C preferably between 80°C and 100°C and under conditions of negative pressure (vacuum) that can get up to 0.1 mbar. This process can also be extended to other types of technical liquids such as diathermic, hydraulic, lubricant, hardening and/or electro erosion. This conversion can be assisted by a concentration irradiation device/s 21 to reduce reaction times and to enhance the yield. This configuration is equipped with integrated controlled feeding devices with mechanical filtration up to 1 µm. One of the possible applications is for insulating liquids, in particular those used in electric transformers, reactors and other strategic equipment for the generation, transmission, distribution and use of power in general that can be performed by fixed or mobile plants, compact for on-site intervention in closed-loop circuit without even partially draining the transformer or equipment. The saturated and/or spent particle supports can be re-functionalized for the recovery of the oil or other impregnating technical liquid with extraction process using solvent as described here above, while the particle support is subject to pyrolysis, in module C 109, up to 600°C for its full re-functionalization and recovery as an alternative to the current treatment processes by combustion in column or disposal as wastes by incineration or disposal in authorized landfill. Tar sands containing hydrocarbons in general and/or contaminated soils in general can be converted by sequential extraction processes with solvents to obtain hydrocarbons or other carbonaceous matrices to be valorised. In the case of tires, WEEE wastes and/or car fluff (ASR) and /or composite materials in general it is possible to facilitate the separation of metals or other materials from the matrix as is to be converted under particular process conditions using cryogenic fluids such as liquid air or liquid nitrogen up to -200°C and more that make brittle the carbonaceous matrix as is thus facilitating the separation and the recovery of metals and materials contents (i.e. harmonic steel from used tires etc.). It is possible to realize thermo-chemical conversion processes of polypropylene and/or primary and/or residual polystyrene in a temperature range of 300-500°C in presence or not of specific catalysts to obtain a low viscosity liquid with high calorific value as "energetic carrier" or other applications. In presence of halogenated compounds, for example PBB (PolyBromoBiphenyl) it was surprisingly noticed that it is possible to easily separate the Bromine (Br) under the form of bromidic acid (HBr) that can be reused as is or neutralized by a base to form the relevant salt. Thus, this process provides surprising efficiency for the dehalogenation of some residual polymeric compounds and the production of a carrier that facilitates the treatment of emissions of other processes having higher concentrations of halogenated compounds.

The modular plant can be configured with "module C 109 - flexible hyper-dynamic pyrolysis" - that makes reference to the basic module previously described. Module C 109 provides one or more among the following key functions and/or processes: 1 - thermo-chemical conversion from 200°C up to 900°C, depending upon the type of process to be implemented; 2 - torrefaction of biomasses between 200°C and 300°C with resident times between 1 min up to 60 min; 3 - pyrolysis of biomasses between 350°C and 700°C with residence time from 30s to 30min; 4 - pyrolysis of non-biogenic materials between 300°C and 750°C with resident times between 1min and 120min and higher; 5 - gasification of solid carbonaceous matrices between 700°C and 900°C with resident times between 2s and 10 min; 6 - minimization of the loss of pressure between the upstream and downstream parts of the module and operational pressure with slight depression with respect to the atmospheric one; 7 - Controlled atmosphere (i.e. absence of oxygen, flushing with process gas and/or inert gas and/or depression to evacuate the air) by safety sealing; 8 - possible synergic use of thermally conductive carriers with the scope of enhancing the functions described in the basic module under hyper-dynamic conditions; 9 - self-cleaning of the entire system by the hyper-dynamic fluid bed provided by the thermally conductive carriers; 10 - process operational modalities of a continuous and/or discontinuous type; 11 - catalytic effect by the supply of one or more catalytic cooperating reagents and additives in stoichiometric concentrations; 12 - optimized production of char. From module C it is possible to obtain mainly: biogenic torrefacts (BioTor 111), vegetable char (BioChar 111), solid from pyrolysis (Char 111), activated carbon (BioActCoal 111), pyrolysis liquid (BioPyroLiq, PyroLiq 117), pyrolysis gas (BioPyroGas, PyroGas 124), solid with high ferrous non-ferrous and noble metals content 111. The torrefact (BioTor 111) presents the following main characteristics of "bio-energetic factors"": 1 - energetic density increased up to 30% more with respect to material; 2 - 35-40% volume reduction of the heterogeneous carbonaceous matrices as they are 66; 3 - 3% lower humidity in weight; 4 - elevated hydro-repelling properties; 5 - sterilization from bacteria, fungi, mildews and/or their consortia that otherwise could operate progressively diminishing the energetic content and incrementing the hygienic sanitary risks; 6 - elimination of self-combustion risks of stocks; 7 - easy dimensional reduction ("grindability") and homogeneity of the torrefied material; 8 - enhanced simplification, safety and profitability in the logistic chain (harvesting, transportation, stocking, use etc.); 9 - use of co-firing in general to reduce the CO₂ emissions of traditional combustion processes that use non-renewable sources; 10 - trading of certificates linked to the reduction of CO₂ emissions. Vegetable char (BioChar 111) presenting the following main characteristics of "bio-energetic carriers" or as agricultural amendments: 1 - enhanced energetic density up to 76% more with respect to the heterogeneous solid carbonaceous matrix as is 66; 2 - possibility of use as agricultural amendment for the enhancing of yields up to 20% more; 3 - possibility of use in capturing CO₂ (since 1kg of biochar captures up to 3kg of CO₂e) - "CO₂-Negative - CO₂N" 141 ; 4 - use in co-firing in general to reduce the emissions of CO₂ of traditional combustion processes using non-renewable sources; 5 - trading of certificates linked to the reduction of CO₂ emissions. Biogenic activated carbons (BiocActCoal 111) present the following main characteristics of "bio-energetic carriers": 1 - elevated active superficial area up to 800-1000m²g⁻¹; 2 - possibility of being formulated in different particle size (brickets, pellets, etc.) suitable for direct application or to be impregnated with specific catalysts (e.g. selective treatment of primary and/or drinking waters, treatment and filtration of vegetable and/or technical oils); 3 - possibility of being reintegrated by re-functionalization by pyrolysis processes assisted by concentration irradiation device (microwaves, radio frequency and/or electromagnetic fields). Biogenic pyrolysis liquids (BioPyroLiq 117) present the following main characteristics as "bio-energetic carriers": 1 - enhanced energetic density with respect to the heterogeneous solid carbonaceous matrix as is 66; 2 - enhanced simplification, safety and profitability in the logistic chain (harvesting, transportation, etc.); 3 - use in bio-refinery and use in energy cogeneration groups. A special pyrolysis process is applied to the WEEE wastes chain and allows the simultaneous separation of the organic matrix in the liquid (PyroLiq 117) and/or gaseous (PyroGas 124) fraction, whereas the inorganic matrix results together with the solid carbonaceous matrix (Char 111) where the ferrous, non-ferrous and noble metals content concentrates facilitating the metallurgic and/or selective electrochemical recovery of metals that would be otherwise difficult to be extracted. Simultaneously, it is possible to realize a dehalogenation and/or detoxification process of the halogenated compounds POPs that are present in the initial electric and electronic material as components of the polymeric material itself or as flame retardants (i.e. PBBs, PCBs etc.) by a catalytic reaction neutralizing them under a form of acids (HBr, HCl, etc.) and a sub-form of salts thereof. This application can be extended to polymeric materials and/or composites in general (i.e. carbon fiber, glass fibers) that in this manner can possibly be more easily recovered and re-functionalized together with the filler etc. This approach can also be applied to selective desorption processes of organic compounds or hydrocarbons from inorganic matrices in general and/or thermo-chemical conversion, extraction and re-functionalization of filtering supports (i.e. activated carbon, fuller earths, diatoms, silica gel, activated allumina, zeolites and pumice in the food or industrial chains in general) or in the field of decontamination and/or treatment of contaminated soils (i.e. soils, particle solid materials in general) and/or tar sands. The dehalogenation and detoxification processes of POPs use additives and/or catalysts such as CaO and/or CaCO₃ and/or KOH and/or MgCa(CO₃)₂ and/or ((Mg,Fe)₂SiO₄) and/or ZnO and/or MnO and/or CuO and/or Fe₂O₃ and/or MgO and/or MgCO₃, oxide or hydroxide of alkaline metal and/or alkaline-earth and/or C₁-C₆ alcoholate of alkaline metal and/or alkaline-earth. This process is classified as "Non-Combustion Technology" of residual material and/or wastes in general.

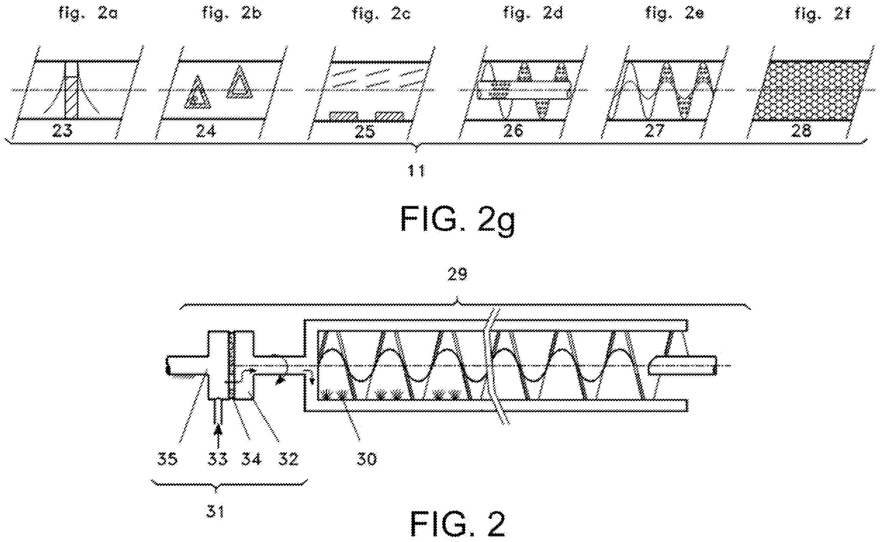

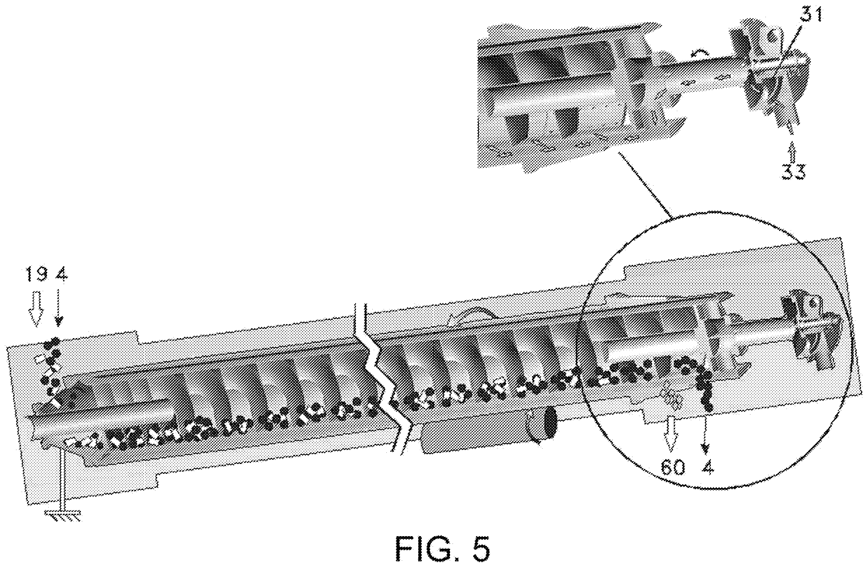

The modular plant can be configured as "module D 114 - heating and/or sub-stoichiometric oxidation" - that makes reference to the basic module described. Module D 114 provides one or more among the following key functions and/or processes: 1 - heating of the spheres and/or thermally conductive carriers 4 in continuous mode and closed-loop with module C 109 itself; 2 - thermo-chemical conversion of torrefact or pyrolysis char 110 obtained from the conversion processes in module C 109; 3 - energetic self-sustaining of the main thermo-chemical conversion process from 300°C to 1050°C depending upon the temperature required in module C 109; 4 - minimization of the pressure loss between the upstream and downstream sides of the module and with operational pressures slightly in depression with respect to the atmospheric one and effective evacuation of the gas produced; 5 - oxidation of the carbonaceous matrix by selective and synchronized distribution of the process fluids 33 or of the oxidative gaseous or liquid agents 104 and 119; 6 - transportation, feeding and dosing of the spheres and/or thermally conductive carriers 4 in closed-loop with module C 109; 7 - transportation and lifting of the spheres and/or thermally conductive carriers 4; 8 - easy evacuation of ashes 115 or heavy fraction converted carbonaceous matrix 19. From module D are mainly obtained: syngas or Biosyngas from sub-stoichiometric oxidation 113, solid (Char o BioChar 111), ashes and micro nutrients 115. Also, in this module a thermo-chemical conversion process is taking place under sub-stoichiometric conditions, capable of generating the primary thermal energy totally satisfying the thermal demand of the entire modular plant and in particular of module C 109 for the heating of the spheres and/or thermally conductive carriers 4 constituting, de facto, the most efficient conversion system of carbonaceous matrices into thermal energy. The injection and targeted distribution of oxidative agents is realized by a special rotary distributor device 31 previously described and indicated in Figure 2 and Figure 5.

The modular plant can be configured as "module E 116 - catalytic pyrogasification with molten metal" - that makes reference to the basic module described. Module E 116 provides one or more among the following key functions and/or processes: 1 - direct and simplified thermo-chemical conversion under different isotherm conditions, if required, of solid, liquid and gaseous matrices with the use of molten metal and/or alloys thereof, in a temperature range from 250°C to 1200°C and more, but preferably up to 900°C; 2 - use of alloys of molten metal and/or alloys thereof with metals with catalytic effect; 3 - fractioned distillation, regeneration and/or re-refining of technical fluids with hydrocarbon base, natural and/or synthetic esters; 4 - integrated conversion of metal oxides into metal by a concentrated irradiation device (microwaves, radio frequency, electromagnetic fields and/or power laser) 64 in reducing ambient; 5 - application as a type MMA-SOFC fuel cell for the direct conversion into electric and thermal power; 6 - conversion and detoxification of POPs including PCBs and/or other dangerous organic compounds. Module E is fed by a specific inlet device of the homogeneous solid carbonaceous matrix as is at low concentration of water 74. From module E are mainly obtained: syngas or Biosyngas 120, solid (Char o BioChar 111), ashes and micro nutrients 115, recovery watery matrices 104, high yield electric and/or thermal energy and/or bio-energy 132. In module E a molten metal and/or alloys thereof is used as thermally conductive carriers so that a more efficient thermal exchange carrier and catalytic effect are obtained. This provides a simplification of the processes and the compaction of the plant that make it applicable also for reduced productive capacities. The oxygen that is intrinsically present in the carbonaceous matrices to be converted 6 reacts with the metals forming the relevant oxides. These oxides, generated by the reaction, float together with the char in the upper side of the reactor since they are lighter, and are collected into a restricted zone designated as "reduction chamber" 64 arranged on the surface of molten metal 50. The metal oxides are intimately mixed with a carbonaceous matrix (Char) characterized by an elevated concentration of Carbon, thus capable of effectively absorbing the concentrated energy provided by a concentrated irradiation device (micro waves, radio frequency, electromagnetic fields and/or power laser) 64. In this manner, strongly reducing conditions are created providing a continuous conversion, re-functionalization and re-supply of the metal in the reactor at lower temperatures with respect to the typical molten metal reactors (Fe, alloys with Sn and Zn operating at temperatures up to 1600°C) with a subsequent higher reliability and strength of the unit also in small sizes (from 50 to 1000kWe). Also, in this module a special thermal and/or fractioned distillation conversion process takes place to obtain technical fluids, re-refined oils for re-formulation of new hydrocarbon bases. From this surprising condition it is possible to realize also an ultra compact configuration for the electro-chemical conversion with fuel cells (MMA-SOFC Molten Metal Anode - Solid Oxide Fuel Cell) where the molten metal has the function of anode, that is electrically integrated with the cathode and that operates at temperatures up to 1000°C. The electrochemical conversion ambient is essentially made of molten metal 50 continuously fed by an appropriate flow of solid, liquid and/or gaseous heterogeneous carbonaceous matrix (fuel) 6 and appropriately controlled in its content of oxygen. The concentration of oxygen must be less than 2%, but preferably between 0.1-0.2%. The fuel providing carbon to form H₂ and CO creates the condition to activate the electrochemical reactions of the fuel cell (e.g. in the case of Tin - SnO₂ → Sn+2O⁻) originating electrons according to the known chemical reactions (CO+O₂₋ → CO₂+2e-, H₂+O₂₋ → H₂O+2e-) as indicated in Figure 6. The cathode 55 is essentially made of a "cluster" of elementary cells (pipes) and the walls of each single cell are composed of two layers. The first layer makes the electrolyte and is made with a special ceramic material, preferably Yttria-stabilized Zirconia (YSZ) and capable of permeating Oxygen ions, whereas the second layer, externally in contact with molten metal 50, is preferably a Nickel alloy and ceramic material with Zirconium base (Ni-YSZ). Thus the current of electrons is continuously taken from the terminals. The typical electric performance of the single electric cell results is equivalent to 0.65 V/cell and the electric power equivalent to 1.5W/cm². Thus, the entire conversion reactor of the generic carbonaceous matrix 6 becomes an efficient and compact co-generation system with electric efficiency up to 52% and more and total efficiency up to 90%. The operational temperature in the configuration MMA-SOFC is up to 1000°C. The compactness of this solution allows an easier decentralized inter connection in electric grids "Smart Grids". To extend the operational conversion flexibility it is preferable with additives the initial carbonaceous matrix 6 with bases such as for example CaO and/or CaCO₃, MgO and/or MgCO₃, to neutralize and/or detoxify derivatives of Sulphur and halogenated organics with Chlorine, Fluorine, Bromine. A modular plant with rotor 9 with molten metal is classified as a conversion process of heterogeneous carbonaceous matrices, for example halogenated ones, containing and/or contaminated by POPs including or not PCBs and other dangerous organic compounds, alternative to traditional incineration processes by high temperature combustion (1200°C with resident time >2s) characterizing itself as a "Non-Combustion Technology" for residual materials and/or wastes in general. This application of the process that is carried out without inlet of oxidizing agent to prevent the formation of highly dangerous by-products (i.e. PCDDs dioxins, PVDF-furans) and explained herewith at an exemplifying title, can be used under lower temperature conditions (in the range of 450-750°C) with catalytic action of the alloy of molten metals and possibly with the help of cooperating agents such as primary or secondary donors of hydrogen with the possible addition of CaO and/or CaCO₃ and/or KOH and/or MgCa(CO₃) and/or (Mg,Fe)₂SiO₄ and/or ZnO and/or MnO and/or Fe₂O₃ and/or MgO and/or MgCO₃, oxide or hydroxide of alkaline metal and/or alkaline- earths and/or C₁-C₆ alcoholate of alkaline metal and/or alkaline- earths, obtaining the detoxification of POPs and the recovery of "Secondary Raw Materials" (e.g. acids of chlorine HCl, Bromine HBr and/or salts thereof, liquid and/or gaseous carbonaceous matrices with high energetic power etc.).

The modular plant can be configured as module F 118 - hyper-dynamic catalytic gasification - which makes reference to the basic module described here above. Module F 118 provides one or more of the following key functions and/or processes: 1 - gasification of the converted volatile carbonaceous matrices 113 obtained by module C 109 and D 114 into permanent gas from 700°C up to 1200°C, preferably about 850-900°C by injection of oxidizing agents; 2 - catalytic action with the help of large surface catalysts under hyper-dynamic conditions; 3 - minimization of the production of POPs/tars and acid compounds; 4 - minimization of the loss of pressure between the upstream and downstream of the module and with operational pressures slightly lower with respect to the atmospheric one (depression) and effective evacuation of the gases produced; 5 - self-cleaning conditions; 6 - easy evacuation of the ashes 115; 7 - production of multi-wall carbon nanotubes and hydrogen H₂. From module F are mainly obtained: syngas or Biosyngas 120, ashes and micro nutrients 115, advanced materials such as multi-wall nanotubes, hydrogen H₂, carbon fibre, secondary fillers, and energy. Module F 118 has a thermally conductive fluidized particle bed 128 possibly integrated with deposit of catalytic metal on the internal pores such as for example Nickel and/or its alloys. For this purpose, on the head of the rotor there are a conveying device of the volatile converted carbonaceous matrices 113 (coming from module C 109) and possibly, gas produced by module D 114. The reactor is equipped with rotary head for the injection of the oxidizing agent (air/Oxygen) 119 and steam 104 that triggers the required increment of temperature and that in a sub-stoichiometric concentration, convert into permanent gas the organic fractions interacting with the catalytic particle support making up the mobile bed 28. As oxidizing agent it uses the Oxygen rich gaseous matrix 119 coming from module H 127. The rotor is also equipped with a feeding device of the particle support that it is typically made of sections of spiral 27 with counter rotating start fixed to rotor 9 itself and can provide the conveying in continuous mode the mobile catalytic bed 28 in the central section maximizing its height. Specific devices can be present in the central section 11 suitable to ensure continuously the hyper-dynamic operational conditions and capable of valorizing the functional and energetic quality of the gas produced. The conversion into permanent gas (Syngas 120) occurs with the help of mixture composed of metal based catalysts such as for example Ni, Cr, Mn, Fe, Co, Ti, etc. and/or alloys thereof. It can also be used additionally as integration as additives and catalysts oxides and/or silicates such as for example (Mg,Fe)₂SiO₄, MgCa(CO₃)₂, SiC, activated Al₂O₃, silica gel, etc. and neutralization additives for the acid compounds (i.e. H₂S, HBr, HCl, etc.) such as for example KOH, CaO, MgO, CaCO₃ etc.. This configuration guarantees elevated conversion efficiency into syngas respecting what are the characteristics that distinguish a fluidized bed: optimized mixing of the bed, homogeneity of temperature, elevated heating speed of the organic vapours of the pyrolysis, possibility of adding additives and/or catalyzer, possibility of internal or external circulation of the material constituting the bed, intrinsic self-cleaning capacity. To optimize the self-cleaning capacity the action of continuous friction in dynamic state is exploited both for the external and internal cleaning of the catalytic filling bodies. The friction itself among the filling bodies ensures the cleaning of the external surfaces, whereas the auxiliary filling bodies (i.e. small spheres 4 of a diameter smaller than the internal section of the filling bodies) have the function of crossing, friction and maintaining clean the internal catalytic surfaces. Multi Wall Carbon NanoTubes (MWCNT) can be obtained by dual stage catalytic conversion of the syngas at high temperature through the use of specific catalysts that can be ferrocene Fe(C₅H₅)₂ and other metallorganic compounds and their derivatives, intermetallic compounds obtained from carbonates of Lanthanum, Neodymium and Nickel i.e. LaNi₅ e NdNi₅ that simultaneously produces a mixture with a high content of hydrogen which results being the main sub-product of the production of multi-wall carbon nanotubes.

The modular plant can be configured with "module G 122 - integrated treatment of gases". Module G 122 provides one or more of the following key functions and/or processes: 1 - abatement of the gas temperature from 1000°C to temperatures compatible with the downstream use with low losses of pressure and under a slight depression; 2 - condensation of the liquid matrices at low temperature and possible regulation of the process temperature of the single phases based upon the dew point temperature of the condensables; 3 - removal of POPs, tars, NH₃, solid particulate and other contaminants up to a concentration compatible with the application and environmental prescriptions; 4 - low energy consumption, maximized compactness and operational flexibility with elevated efficiency and easy energetic recovery of the heat removed. From module G are mainly obtained: Biosyngas or syngas 124, intermediate watery matrices 123, ashes and micronutrients 115 and carbonaceous matrices to be converted 121 and pyrolysis liquid (BioPyroLiq and PyroLiq 117). The syngas and/or Biosyngas 124 are characterized by "POPs & tars Free" 143, i.e. they present a concentration of contaminants below what is prescribed by local norms and by the requisites imposed by the downstream applications. For what the tars are concerned, levels below 50mg/Nm³ are achieved and for NH₃ values below 25mg/Nm³. The modular plant from which the converted carbonaceous matrices 117 and 124 are obtained is characterized by the low environmental impact in terms of low total emissions into the atmosphere 139.

The modular plant can be configured with "module H - photo-bio-reactor for microalgae" - that is located downstream of the other modules making up the plant. Module H provides one or more of the following key functions and/or processes: 1 - integrated conversion of the gaseous emissions of the upstream primary thermo-chemical processes with "Zero Emissions - ZE" 142; 2 - biochemical conversion of carbonaceous matrices by photosynthesis of the CO₂ obtained from the processes and/or cogeneration systems (CHP), of the NOₓ compounds and particulate, of the micro elements contained by the pyrogasification ashes, of the carbonaceous matrices contained by the process waters and the recovery of energy; 3 - realization of a virtuous localized self-production cycle; 4 - on-site production of Oxygen as derivative product from cultivation of algal biomass; 5 - containerizable , compact module, with devices for the growth intensification of micro algae stocks. From module H are mainly obtained: primary algal biomasses 130; gases at very high concentration of Oxygen 119. The primary algal biomasses 130 can be dried in module A 102 and lyophilised, packaged (as powder, granulate, pellets etc.) in module N 103 to make up an algal biomass derivative product 136 to be used as food integrator (for animals, fish farming etc.) or as "bio-energetic carriers". The module is compact, stackable and containerizable in series or parallel, and has tubular reactors equipped with integrated lighting by cycles of artificial light optimized for the cultivation of algae stocks in general that is further intensified by the combined action of bio-electric stimulation and the targeted inoculation of micronutrients with specific chelating agents.

The modular plant can be configured as "module I 133 - interface for various modules". As a purely simplifying title, the modules described here above must be properly interfaced with one or more of the following external modules: 1 - utilities module for energetic and electric continuity in case of emergency; 2 - device for the blowing-in of inert gas for regulated shutdown in order to prevent the formation of potentially explosive conditions and their possible triggering; 3 - combustion and treatment device of the emissions (i.e. pyrolytic torch) in case of start up/shut-down of the plant or emergency including system of controlled conveying of accidental emissions; 4 - supervision and monitoring of the various conversion processes in remote and redundant mode including module for diagnostics, e-Maintenance and e-Leaming in remote modality as well (Web-based).

The modular plant can be configured as "module L 131 - Cogeneration module (CHP) - that makes the modular plant able to operate autonomously and simultaneously supply electric power to the grid, thermal and/or refrigerating power 132 possibly into "Smart electric grids". The cogeneration module for the production of electric, thermal and/or refrigerating energy 132 can be made with the help of endothermic engine (gas, liquid fuels, "dual fuel" etc.), Stirling engines, gas turbine; fuel cells (SOFC independent and/or through integration with module I), ORC (Organic Rankine Cycle) turbo generator, etc. With gas engines it is possible to reach efficiencies in terms of energetic conversion from the carbonaceous matrix as is 66 to the production of electric and thermal bio-energy 132 in the order up to 30% electric and more than 80% overall. In case products are used totally for the purpose of cogeneration gaseous 124 or liquid 117 gaseous biogenic converted carbonaceous matrices, the balance of CO₂ results being "CO₂ neutral - CO₂n" 140.

The modular plant can be configured as "module M 134 - micro GTL (Fischer-Tropsch)" - that derives from the basic module, capable of producing advanced liquids (intermediates for chemistry, pharmaceutics, cosmetics, etc.) and quality "bio-energetic carriers". This conversion process GTL occurs in the presence of particle metal catalysts in suspension and with a syngas that shows a H₂/CO ratio of about 1.5-2 times and possibly helped by the presence of an oils liquid carrier and/or helped by a concentrated irradiation device (microwaves, radio frequency, electromagnetic fields) 21.

The modular plant can be configured as "module N 103 - stabilization and packaging" - including one or more devices for the packaging by compression (granulate, pellets, brickets, stocks, etc.) and/or lyophilisation of the "derived products" and "energetic and bio-energetic carriers". Module N is fed with solid carbonaceous matrix for derivative product (Cok and Biocok 126) and/or with heavy carbonaceous matrix 19 coming from the torrefaction, pyrolysis treatments, etc. for derivative products (BioTor, Biochar 111, carbon black 112). The stabilization, homogenization and safety packaging are done for the classification, finalized for the safety card (REACH), for handling, transportation of dangerous goods (ADR, IMCO, etc.) and for use. This module is strategic toward the prevention of unreasonable risks for workers, public health and the environment and in particular for accidental events caused by self-combustion, explosion and fire (e.g. non compacted pyrolysis char).

### Examples

Some simplifying but not limiting examples of some results of the possible configuration with the modular plant for some typical conversion processes of carbonaceous matrices presented in the field of application and its scope are described below.

### EXAMPLE I

Rotary reactor and thermal exchange provided by steel spheres as thermally conductive carrier.

The results are indicated in Table I.

**Table I**

| Typology of reactor | Rotary reactor with metal spheres | Conventional rotary kiln heated only outside the jacket |
|---|---|---|
| Flow of material [kg h⁻¹] | 650 | |
| Relative humidity [% in weight on as it is] | 15 | |
| Demand of process material [t year⁻¹] | 5200 | |
| Pyrolysis temperature [°C] | 500 | |
| Residence time [min] | 7 | |
| Energetic demand for pyrolysis kWh kg^{- 1}_{MATR_CARBONIOSA}] | 0,7 | |
| Thermal power required for pyrolysis [kW] | 455 | |
| Diameter of rotor [mm] | 700 | 3.000 |
| Length of rotor [mm] | 4.000 | 11.500 |
| Filling of rotor [% on diameter] | 40 | unknown |
| Metal spheres (diameter 18mm mass 0,024kg⁻⁻¹ sphere surface 1,02m¹) | AISI 310 | NO |
| Thermal exchange surface available in the reactor with the thermally conductive carriers [m²] | 108 | NO |
| Rotor external surface [m²] | 8,8 | unknown |
| Volume ratio of rotors | 1:52,6 | |

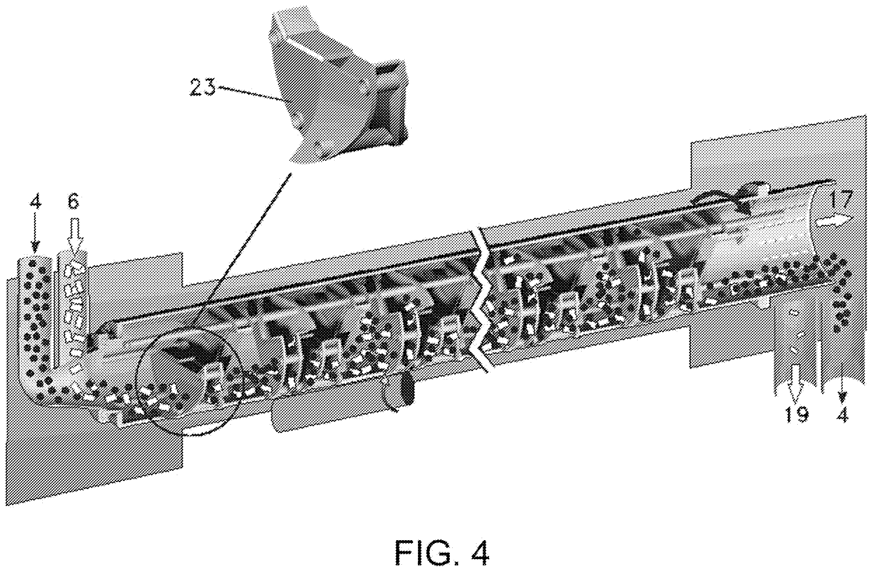

When comparing the typical dimensions required by the rotary reactor with metal spheres with those of a conventional rotary kiln heated only outside the jacket, the first ones are inferior by a factor up to 50 times in terms of volume occupied with the same flow capacity and primary energetic demand. The characteristics of this invention allow a drastic reduction of the conversion times and consequently the plant dimensions with the same delivery capacity of generic carbonaceous matrices to be converted 6. An additional and decisive contribution to the enhancing of the global coefficient of thermal exchange is given by the hyper-dynamic state 10 in the reactor, the uniform distribution of the bed and the intimate contact with the carbonaceous matrix itself. The hyper-dynamic state derives from the synergic action of the internal organs 11 that provide the functions of transportation, "mixing", "milling" and possibly catalytic action that characterizes the interaction with the metal spheres and/or the thermally conductive carriers 4 in rotor 9 (Figure 4). This is more evident, for example, when compared with the Haloclean® plant (EP 1354172 A1), where the carbonaceous matrix inside the rotary kiln is transported by a screw. Also, the resident times indicated and the dimensions of the reactor provided by the technical- commercial brochure "Pyrobio Energy+ PyroGazeification des Matieres Organiques" by Finaxo Environnement of 2008 relative to the technology (WO2005018841 A2) can be compared to those which it is possible to assume that the hyper-dynamic conditions allow the reduction of the volumes of the rotor by at least 3 times with the same production capacity. The hyper-dynamic conditions under which the conversion occurs in the reactor subject of this invention, provide surprisingly a response to critical factor VII described above and solve the criticalities indicated also by patent WO2010130988 A1 on the correlation between the dimensions of the particles and the contribution of heat that determines the efficiency of the thermo-chemical conversion according to the notorious relation t_{ΔT}≥Cdₓ where t is the time necessary for the conversion, ΔT the temperature increment in the heart of the particle of carbonaceous matrix, C is a constant relative to the speed of advancement of the thermal front in the particle [s/m] and dₓ is the particle size index of the particle matrix. For the comparison with other thermal carriers used, at a simplifying title, it is optimistically assumed that the global coefficient of exchange in the conventional kiln is equivalent to the one considered in the case of presence of the spheres and/or thermally conductive carriers 4. As a general line, the use of steel spheres as thermally conductive carriers provides a thermal exchange much more efficient with respect to all those conversion systems using quartzous sand or similar ones. This involves a strong reduction of the volumes required, for example, in gasifiers with re-circulating fluid bed like the one in Güssing (Austria) mentioned in this patent in the section State of the Technique. Also, the use of metal spheres prevents the criticality given by the formation of light particles deriving from the disaggregation of the sand.

### EXAMPLE II

### Integrated conversion of oleaginous carbonaceous matrix - Jatropha Curcas

The results are presented in Tables II, III, IV, V. Among the oil recovery, it is presented here after the case of application on Jatropha Curcas (Euphorbiaceae family). The oil content in the seed can reach 55-60% in weight. The shell and the stone of the seed of Jatropha Curcas represent about 60% and 40% of the total mass of the seed. The stone is rich with lipids and proteins, but it also contains a significant amount of natural detergent fibers and ashes. Triglycerides are the main components of the Jatropha Curcas oil, which represent about 90% of the total mass of lipids. The current State of the Art involves the typical extraction by mechanical pressing after the seeds have been shelled by mills and strongly pressed to extract the oil in a single stage. This level of extraction is not complete and has, in any case, low efficiencies (about 30-38% in weight). The oil extracted requires a subsequent filtration and "degumming". Another method of extraction uses one or more solvents, for example hexane, that provides an extraction efficiency greater than 90% in weight on the total oil contained by the seed. When this extraction process is assisted, besides a solvent (i.e. hexane), also by a concentrated irradiation device with ultrasounds 21 in closed-loop, operating under continuous or discontinued modality, the yield can be enhanced up to 95% and more with a significant reduction of the times. One of the critical factors of the use of Jatropha Curcas is the extraction solid residue ("cake") at high toxicity for humans and animals of some compounds present in the seeds, among them some inhibitors of trypsin. Trypsin is indeed a fundamental enzyme in the digestion of proteins both in animal and human nutrition. Table II lists the concentrations of the toxic and anti-nutritional components in the de-oiled "cake" of some varieties of Jatropha Curcas and the "cake" from Soya seeds:

**Table II**

| Component | | Jatropha High toxicity | Jatropha Low toxicity | Soya seeds |
|---|---|---|---|---|
| Lectin (anti-nutrient) | [mg g⁻¹] | 102 | 51 | 0,32 |
| Trypsin inhibitor (anti-nutrient) | [mg g⁻¹] | 21,3 | 26,5 | 3,9 |
| Phytates (anti-nutrient) | [%] | 9,4 | 8,9 | 1,5 |
| Saponins (anti-nutrient) | [%] | 2,6 | 3,4 | 4,7 |
| Ester of Phorbol (toxic) | [mg g⁻¹] | 2,8 | 0,11 | - |

| | | | | |
|---|---|---|---|---|
| Source: Makkar & Becker 1997; Soya Mainz GmbH and Co KG. Dannweg 2.Mainz, Germany | | | | |

For this reason, the liquid and solid ("cake") matrices are not directly usable for the purpose of human or animal nutrition. Thus, the oil fraction finds applications mainly for a subsequent conversion into bio-diesel by transesterification. The most toxic compounds are the "phorbol esters" - PE) and they are potential promoters of tumors in humans. By using experimentally the rotary reactor with spheres it has been surprisingly verified that in a single stage it is possible to achieve the complete extraction of the phorbol esters. This occurs by the simultaneous phases of feeding the seed into a simplified module A 102, transportation and corresponding resident time, heating, "mixing" and "milling" inside module B 105 and thus under hyper-dynamic conditions. This conversion can be assisted possibly by a concentrated irradiation device with ultrasounds 21 and can be in continuous or discontinuous mode in the presence of solvents including hexane, methanol, ethanol, isopropanol and acetonitrile. The procedure effected for the tests implemented the extraction of the oil by single solvents or sequential extraction with solvents of different polarities. The solvent has been recovered in closed-loop by under vacuum evaporator and the oil has subsequently been quantified gravimetrically. Extraction is carried out with the solvents, decontamination and detoxification of the toxic compounds present in the solid matrix. The subsequent transesterification of the fraction of oil is done with methanol containing 0.15% of sodium metoxide (CH₃ONa) through the re-circulation in closed-loop at 60°C. The transesterification has been monitored by TLC - Thin Layer Chromatography. Once all the triglycerides have been consumed, the methanol is recovered by under-vacuum distillation in closed-loop, while the part of transesterification in terms of sodium metoxide and methanol has been stoichiometrically consumed. Subsequently, the glycerine is removed and converted in a separate modality into biogenic products of a higher value. From the sequential extraction from the "cake" with different types of solvents the following concentrations of phorbol ester (PE) are obtained, as listed in Table III.

**Table III**

| Solvents for sequential extraction | Concentrations of phorbol esters (PE) in the initial material | Oleous fraction extracted 108 | Concentration of PE in the process material after sequential extraction |
|---|---|---|---|
| | [mg g⁻¹] | [%] | [mg g⁻¹] |
| Hexane Isopropanol | 4,55 | 57,4 | 0,55 |
| Hexane Ethanol | 4,55 | 57,6 | 0,1 |
| Hexane Methanol | 4,55 | 58,1 | <0,02 |

The levels of residual concentration of the phorbol esters (PE) obtained through sequential extraction processes with solvent, hexane, and methanol surprisingly demonstrate below the prescribed toxicity equivalent to 0,1mg g⁻¹ for some varieties of Mexican Jatropha Curcas. The anti-nutrients listed in the preceding table are eliminated by a subsequent treatment of the "cake" through an enzymatic treatment or heating at 120°C for about one hour, better exploiting the thermal exchange provided by the thermally conductive bodies 4 intimately in contact with the "cake" to be treated 6. The results obtained with this process are listed in Table IV.

**Table IV**

| Anti-nutrient or toxic components o | | Concentration in the high toxic variety | Concentration in the low toxicity variety | Detoxified Jatropha meal |
|---|---|---|---|---|
| Lectin (anti-nutrient) | [mg g⁻¹] | 102 | 51 | 5,0 |
| Trypsin inhibitors (anti-nutrients) | [mg g^{-1]} | 21,3 | 26,5 | <2,0 |
| Phytates (anti-nutrients) | [%] | 9,4 | 8,9 | <1,0 |
| Saponins (anti-nutrients) | [%] | 2,6 | 3,4 | 1,8 |
| Phorbol ester (toxic) | [mg g⁻¹] | 3-6 | 0,11 | <0,01 |

The "cake" obtained after the detoxification and anti-nutrient neutralization process has been the subject of an animal nutrition study, in particular chicken. The results of such experimentation are listed in Table V.

**Table V**

| Jatropha flours | | | |
|---|---|---|---|
| Dietary treatment | | | |
| Number of heads used for the study = 14 (for each treatment) | | | |
| Treatment | Diet | Mortality 1 Week | Mortality 2 Week |
| 1 | Positive control with A (initial diet with about 35% of A) | 0 | 0 |
| 2 | 5% of B primary (30% of A + 5% of B not extracted and not treated for trypsin inhibitor) | 9 | Interrupted* |
| 3 | 5% of B as primary flour (30% of A + 5% of B not extracted and treated for trypsin inhibitor) | 8 | Interrupted * |
| 4 | 5% of B by traditional extraction (30% of A + 5% of B extracted and treated for trypsin inhibitor) | 3 | Interrupted * |
| 5 | 5% of B (30% of A + 5% of B in sequentially extracted and treated for trypsin inhibitor) | 0 | 0 |
| 6 | 15% of B | 0 | 0 |

| | | | |
|---|---|---|---|
| * Interrupted for high mortality A = soy seed meal B = Jatropha meal Mortality ratio: Primary "cake" treated and not treated > "cake" treated and traditionally extracted>> "cake" extracted and sequentially treated | | | |

From the results listed in Table V, the efficiency of the sequential extraction process is demonstrated for the production of secondary biogenic solids 106 detoxified "Cake" with high protein content.

The "toxic cake" can be converted by specific treatments into torrefied (BioTor 111) or BioChar 111 and/or syngas 125 and energy 132 directly on the production site and/or near the plantations.

These extraction processes can also be optimized for other typologies of oleaginous seeds such as Olives, Soy, Rice, Palm, Rape, Sunflower, Ricin, Pongamia pinnata etc. A series of applications in the chain of extraction of active principles, oils in general and hydrocarbons 108 from filtering supports (i.e. filtration cake with fuller earths, diatomaceous earths, silica gel, activated allumina, zeolites and pumice in the food or industrial chain in general) or in the field of the treatment of contaminated soils (e.g. soils, particle solid materials in general). Besides this, the extraction of hydrocarbons 108 from tar sands and/or impregnated solid matrices has a particular relevance.

### EXAMPLE III

Integrated conversion of biogenic carbonaceous matrix - transesterification of glycerine and energetic intensification of mixtures with bioliquids.

The rotary reactor provides also a high efficiency in the transesterification of biogenic oils, such as Jatropha Curcas oil, soy oil, palm oil, etc. having mono hydric alcohols, such as methyl alcohol and ethylic alcohol. In addition, the extended surface provided by the metal spheres makes necessary a smaller quantity of catalysts required by the reaction, that minimizes the formation of salty by-products and require a purification of the mono esters and the glycerine sub-product. Derivative liquids from biogenic matrices, such as alcohol 2- propanol, 1,2-propanediol and 1-propanol usable as intermediates in other chemical processes or as bio-energetic carriers 108, can be obtained from the conversion of glycerine by the rotary reactor through the reduction by hydrogenation in the presence of catalysts such as Ni, Pd and Rh deposited on a high surface particle support (silica gel, activated allumina, activated carbon, zeolites, etc.) at a temperature of about 120°C and a pressure between 20 and 40 bar.

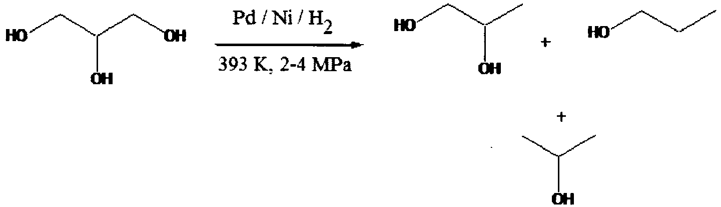

The rotary reactor with spheres is usable for the conversion of residual polystyrene (i.e. deriving from packages) with mono esters, obtained from the transesterification in which the process brings a drastic reduction in volume (100 times or more) of the residual polyesters and is capable of producing liquids and/or gel 108 usable also as protective impregnators of smooth or porous surfaces or as "energetic carriers", in any case preventing the criticalities connected with the disposal of wastes otherwise bulky and not bio-degradable.

### EXAMPLE IV

Integrated conversion of carbonaceous matrix into technical liquids - Insulating liquids.

The results are listed in Table VI.

**Table VI**

| Property | Method | Unit of measure | Recommended limit values | Before treatment | After treatment |
|---|---|---|---|---|---|
| Colour | ASTM D1500 | scale ASTM | - | 4,5 | 1 |
| Breakdown voltage | IEC 60156 | kV | >60 | 40 | >70 |
| Acidity | IEC 62021-1 | mg_{KOH} gₒᵢₗ⁻¹ | <0,10 | 0,17 | 0,03 |
| Dissipation factor - DDF at 90°C | IEC 60247 | - | <0,10 | 0,25 | 0,02 |
| Interfacial tension | ISO 6295 | - | >28 | 18 | 38 |
| Water | IEC 60814 | mg kg⁻¹ | <5 | 38 | 4 |
| Total combustible gas | IEC 60567 | µL L⁻¹ | - | 1500 | 15 |
| Dibenzyl disulphide - DBDS | IEC TC10 VG37-CD | mg kg⁻¹ | <10 | 175 | <5 |
| Total corrosive sulphur | SM TCS | mg kg⁻¹ | <5 | 195 | <5 |
| Passivator - Irgamet 39 | IEC 60666 | mg kg⁻¹ | - | 46 | <3 |
| Polychlorinated biphenyls - PCBs | IEC 61619 EN 12766-3 | mg kg⁻¹ | <25 | 85 | <10 |
| Particles | IEC 60970 | cod. ISO | - | 23/18/12 | 12/11/9 |
| Dissolved copper | ASTM D7151 | mg kg⁻¹ | - | 12 | <1 |

In the specific case an integrated process of physical decontamination, chemical-physical selective depolarization, dehalogenation/detoxification from PCBs and POPs, corrosive compounds, acid polar compounds deriving from oxidation has been carried out in module B 105. The results are complying with standard IEC 60422 ed.3-2005. This result has been obtained with the configuration of module B 105 at a temperature of 80-100°C with reagent equivalent to 2.5% in weight with respect to the oil. In the specific case a reagent constituted and formulated with particle supports based on silicates or aluminosilicates has been used in a dimensional range from 0.5 to 5 mm and in the typical ratio from 50 to 70% in weight, a mixture of inorganic bases with alkaline basic and alkaline-earth (KOH, CaO, MgO, CaCO3) in particle formulation from 0.2 to 5 mm with high surface in the typical ratio from 10 to 20% in weight, polyalkylene glycols with high molecular weight under particle form between 0.2 and 5mm in the typical ratio from 10 to 20% in weight, spheres and/or thermally conductive carriers 104 metals at high catalytic surface in the dimensional range from 0.5 to 5mm (preferably constituted by Fe, Ni, Al, Cu e Zn and alloys thereof). The process conditions are in hyper-dynamic state 10 in a temperature range between 50 to 120°C, preferably between 80 and 100°C and under vacuum conditions that can arrive up to 0.1mbar, but preferably 2 mbar. The oil is injected by a feeding device sending it directly into the rotor, located on the inlet end 2 and exits after the treatment through exit end 15. The oil level is typically maintained at 50-60% of the height on the diameter of rotor 9 under hyper-dynamic conditions. Over the surface of the liquid a vacuum is maintained in order to continuously operate the degassing and dehumidification, or extracting the reaction volatile products, thus performing the integrated conversion in a more effective and fast manner, without the need for arranging perculation columns on particle supports, reagents and/or adsorbents. The oil is subsequently filtered by mechanical filters at 2 or 1 µm nominal. The application described can also be extended to other types of technical fluids in general such as diathermic, hydraulic, lubricating, hardening processes and or electro erosion fluids.

### EXAMPLE V

### Integrated conversion of solid carbonaceous matrix - Torrefaction of biomass

The results are listed in Table VII.

**Table VII**

| Factors of evaluation | Before the torrefaction conversion | After the torrefaction conversion | |
|---|---|---|---|
| | Biomass 6 | Torrefact (BioTor 111) | Torrefaction Gas (113) |
| Mass[% in weight] | 100% | 70% | 30% |
| Energy [%] | 100% | 90% | 10% |
| Calorific value | 17.000 (kJ kg⁻¹ on dry basic) | 24.000 [kJ kg⁻¹] | 3.000 [kJ Nm⁻³] |
| Specific volume | 100% | 60-65% (after compaction) | n. a. |
| Energetic densification (on mass basic) | 100% | 130% | n. a. |
| Humidity (on as is) | 35% | 5% | 30% |

These results are obtainable using a specific plant configuration based upon the integration of modules A 102, C 109, D 114, G 122, L 131, I 133 and N 103. The process temperature is about 280-300°C and the heat required is provided by the spheres and/or thermally conductive bodies 4 coming from module D 114 where they are heated or from an external source or from solid fraction 19 that is produced by the torrefaction itself. The converted volatile carbonaceous matrix (torrefaction gas 113) produced during the torrefaction can, in any case, cover up to 80% of the energetic requirement of the process itself including the preliminary drying by hot gas flow 115. The modular plant that operates the torrefaction process in accordance with the characteristics of this invention is compact, flexible and easily transportable. Such features allow the implementation of a decentralized production strategy of biogenic torrefacts near plantations or forestry areas for the current forest cleaning from branches and bark for the prevention of fires, but also in forests involved by diseases of the plants or unforeseeable attacks by parasites such as "Mountain Pine Beetle" in North America.

### Example VI

Integrated conversion of solid carbonaceous matrix - Pyrolysis of granulate of used tires and secondary polymeric mixtures.

The results are listed in Tables, VIII, IX, X, XI.

**Table VIII**

| Carbonaceous matrices to be converted 74 | Temperature [°C] | Residence time [min] | Distribution of the products | | |
|---|---|---|---|---|---|
| | | | Char 111 [%] | Total liquid 117 [%] | Gas 124 [%] |
| Granulate of used tires | 450 | 10 | 26,2 | 48,8 | 15,0 |

Typical examples of the chemical composition and the energetic content of some carbonaceous matrices that are obtained from the pyrolysis of granulate of tires are listed in Tables IX and X.

**Table IX**

| Carbonaceous matrices to be converted 74 | Initial material 74 | | | | Char 111 | | | | Pyrolysis liquid 117 (in oily phase only) | | | |
|---|---|---|---|---|---|---|---|---|---|---|---|---|
| | PCI [MJ kg⁻¹] | | PCS [MJ kg⁻¹] | | PCI [kJ kg⁻¹] | | PCS [kJ kg⁻¹] | | PCI [kJ kg⁻¹] | | PCS [kJ kg⁻¹] | |
| | As is | w.f. | As is | w.f. | As is | w.f. | As is | w.f. | As is | w.f. | As is | w.f. |
| Granulato pneumatici (450°C 10 min) | 35,6 | 35,8 | 37,2 | 37,5 | 28,8 | 29,0 | 29,0 | 29,2 | 40,3 | 40,9 | 42,7 | 43,2 |

| | | | | | | | | | | | | |
|---|---|---|---|---|---|---|---|---|---|---|---|---|
| * w.f.= water free | | | | | | | | | | | | |

**Table X**

| | | Carbonaceous matrices to be converted 6 | Pyrolysis Char 111 |
|---|---|---|---|
| Carbon | [% in weight] | 81,3 | 79,8 |
| Hydrogen | [% in weight] | 7,6 | 1 |
| Al | [mg kg⁻¹] | 439 | 886 |
| Ca | [mg kg⁻¹] | 2.012 | 5.751 |
| Co | [mg kg⁻¹] | 66 | 136 |
| Cu | [mg kg⁻¹] | 27 | 49 |
| Fe | [mg kg⁻¹] | 263 | 534 |
| K | [mg kg⁻¹] | 238 | 584 |
| Mg | [mg kg⁻¹] | 242 | 429 |
| Na | [mg kg⁻¹ ] | 477 | 884 |
| P | [mg kg⁻¹] | 92 | 200 |
| Pb | [mg kg⁻¹] | unknown | 53 |
| s | [mg kg⁻¹] | 12.254 | 14.709 |
| Si | [mg kg⁻¹] | 9.630 | 15.174 |
| Ti | [mg kg⁻¹] | not determined. | 295 |
| Zn | [mg kg⁻¹] | 11.116 | 19.310 |

The analyses of the pyrolysis liquid (PyroLiq 117) of tires previously filtered at 50µm nominal have provided the values listed in Table XI:

**Table XI**

| Parameter | Method | Unit of measure | Value |
|---|---|---|---|
| Flash point | UNI EN ISO 2719-05 | °C | <20 |
| Water and sediments | ISO 3734 | % in vol | 0,20 |
| Density at 15°C | UNI EN ISO 12185-99 | kg m⁻³ | 935,6 |
| Viscosity at 40°C | UNI EN ISO 3104-00 | mm² s⁻¹ | 5.631 |
| Pour point (automatic) | ISO 3016-94 | °C | -3 |
| Ashes | EN ISO 6245 | % in weight | 0,001 |
| Carbonaceous residue | UNI EN ISO 10370-98 | % in weight | <0,01 |
| Sulphur | UNI EN ISO 8754-05 | % in weight | 1,15 |
| Hydrogen | ASTM D 5291-07 | % in weight | 10,6 |
| Higher Heating Value (HHV) | ASTM D 240-07 | kJ kg⁻¹ | 42.680 |
| Lower Heating Value (LHV) | ASTM D 240-07 | kJ kg ⁻¹ | 40.430 |

The elevated calorific value of the pyrolysis liquid (PyroLiq 117) and its chemical-physical characteristics make it particularly suitable in cogeneration systems (CHP) having calorific value and characteristics equivalent to those of a diesel fuel. These results are obtained with the plant configuration based upon the integration of modules A 102, C 109, D 114, G 122, L 131, I 133 and N 103. In the feeding phase of the module it is preferable to add stoichiometric quantities of additives and/or catalysts 77 (e.g. CaO, CaCO₃, etc.) in a measure variable between 0.5 and 2% in weight finalized toward the neutralization of sulphurized compounds, acid compounds and to minimize the formation of tars and POPs. To the plant configuration described a specific module B105 based on rotor 9 can be integrated for an application in the domain of pre-conversion of tires at low temperatures with cryogenic (e.g. liquid nitrogen, liquid air, etc.). The module described realizes a large integration in a closed-loop system, with high energetic efficiency with features of energetic self-sustainment. The solution implemented in this example provide a response to the valorization of materials coming from the disposal of tires that determines an important critical factor under an environmental point of view, especially when there are large uncontrolled accumulations, in case of fires which can produce atmospheric emission with highly polluting and carcinogenic substances (smokes containing PCAs etc.). This process provides the valorization in an intelligent and flexible manner of the various liquid fractions (fuel) (PyroLiq 117), solid "carbon black" 112 and gas (PyroGas 124), as process energetic support. The particle size distribution of the "carbon black" 112 obtained from the conversion of used tires fall within those classified by Standard ASTM D1765-10. An additional integration can be the use of all the organic fractions obtained from the pyrolysis in module F 118 for hyper-dynamic catalytic gasification in synthesis gaseous carbonaceous matrix (syngas 124). This application can be effectively extended also to polymeric materials in general, such as polypropylene, halogenated and not polymerics, thermoplastics, thermo hardenings, etc.

### EXAMPLE VII

### Integrated conversion of solid carbonaceous matrix -Flexible pyrolysis of biomasses

The results are indicated in Tables XII, XIII.

**Table XII**

| Solid carbonaceous matrices as they are 74 | Tem p [°C] | Residence time [min] | Distribution of products | | | | |
|---|---|---|---|---|---|---|---|
| | | | Pyrolysis solid BioChar 111[%] | Liquid (BioPyroLiq 117) | | | Pyrolysis gas (BioPyroGas 124)[%] |
| | | | | total [%] | Oleous phase | Watery phase | |
| Rape seeds | 350 | 10 | 57,4 | 35,2 | | | 7,4 |
| Rape seeds | 450 | 7 | 32 | 57 | 41 | 16 | 11 |
| Rape seeds | 500 | 7 | 18 | 67,5 | 49,4 | 17,6 | 14,5 |
| Rape seeds | 550 | 10 | 16,1 | 60,2 | 50,0 | 10,2 | 22,3 |
| Rape straw | 450 | 5 | 28,6 | 34,6 | 9,0 | 25,6 | 36,8 |
| Rice husk | 450 | 5 | 36,5 | 45 | 15,0 | 30,0 | 18,5 |
| Coconuts | 450 | 5 | 34,0 | 52,0 | | | 14,0 |
| Olive stone | 450 | 7 | 27,3 | 47,0 | 10,6 | 36,4 | 25,7 |
| Olive residue | 420 | 6 | 27,4 | 53,7 | 15,6 | 38,1 | 18,9 |
| Olive residue | 500 | 5 | 22,7 | 59,5 | 17,6 | 41,9 | 17,8 |
| Olive residue (dried) | 450 | 5 | 29,7 | 50,5 | 21,1 | 29,4 | 19,8 |
| Sunflower seeds | 450 | 5 | 25,7 | 55,3 | | | 19,0 |
| Sunflower seed residues | 450 | 5 | 31,1 | 41,8 | | | 27,1 |
| Pellets Wheat straw | 450 | 7 | 35,0 | 46,0 | 8,3 | 37,7 | 19,0 |
| Beer production residues | 450 | 6 | 32,9 | 50,1 | 35,6 | 14,5 | 17,0 |
| Dried beer production residues | 450 | 6 | 27,3 | 57,9 | 25,3 | 32,6 | 14,8 |

Typical examples of the energetic content of some initial carbonaceous matrices and solid and liquid "bio-energetic carriers" obtained from flexible pyrolysis are listed in Table XIII:

**Table XIII**

| Carbonaceous matrix (temp.- res. time) | Solid carbonaceous matrix as is (74) | | | | Pyrolysis solid (BioChar 111) | | | | Pyrolysis liquid (BioPyroLiq 117) (oleous phase only) | | | |
|---|---|---|---|---|---|---|---|---|---|---|---|---|
| | LHV [MJ kg⁻¹] | | HHV [MJ kg⁻¹] | | LHV [MJ kg⁻¹] | | HHV [MJ kg⁻¹] | | LHV [MJ kg⁻¹] | | PHV [MJ kg⁻¹] | |
| | a.i. | w.f. | a.i. | w.f. | a.i. | w.f. | a.i. | w.f. | a.i. | w.f. | a.i. | w.f. |
| Rape seeds (450°C-7min) | 25,3 | 27,6 | 27,0 | 29,3 | 30,3 | 30,8 | 31,6 | 32,3 | 35,1 | 36,6 | 37,5 | 39,0 |
| Rape seeds (500°C-7min) | 24,4 | 26,6 | 26,0 | 28,2 | 25,6 | 25,9 | 26,4 | 26,7 | 34,5 | 35,8 | 36,7 | 38,0 |
| Rape seeds (550°C-1 0min) | 25,2 | 27,5 | 26,9 | 29,2 | 25,4 | 26,1 | 26,0 | 26,7 | 34,7 | 36,6 | 37,0 | 39,0 |
| Olive pressing residue (450°C-7min) | 18,8 | 21,0 | 20,4 | 22,4 | 23,8 | 24,0 | 25,0 | 25,2 | 15,8 | 24,3 | 17,9 | 26,3 |
| Olive stone (450°C-7min) | 18,3 | 19,4 | 19,7 | 20,7 | 29,0 | 29,4 | 29,7 | 30,1 | 26,4 | 28,5 | 28,1 | 30,1 |
| Rice husk (450°C-5min) | 14,5 | 15,8 | 15,7 | 17,0 | 20,0 | 20,3 | 20,6 | 21,0 | 20,8 | 24,6 | 22,5 | 26,6 |

| | | | | | | | | | | | | |
|---|---|---|---|---|---|---|---|---|---|---|---|---|
| * a.i.= as is w.f.= water free LHV = Lower Heating Value HHV = Higher Heating Value | | | | | | | | | | | | |

The results demonstrate that the pyrolysis process that can be realized by this plant is characterized by an elevated operational flexibility in terms of easy variation and control of fundamental process parameters (temperature, resident time, controlled ambient, hyper-dynamic conditions, etc.) and a wide spectrum of compatible materials (in terms of humidity, granulometry, ashes content, etc.) and output derivative materials. The POPs (PCDDs and PCDFs) in the liquid (BioPyroLiq 117) and solid (BioChar 111) "bio-energetic carriers" obtained from the pyrolysis conversion of wheat straw under the different process conditions listed above and expressed in terms of ng kg⁻¹ I-TEQ (International - Toxicity Equivalent Quantity) always resulted well below the limit concentrations prescribed by the norms, in particular from 10.7 ng kg⁻¹ to a maximum of 30,8 ng kg⁻¹. The configuration of the modular plant used to obtain these results is based upon the integration of modules A 102, C 109, D 114, G 122, L 131, I 133 ed N 103.

### EXAMPLE VIII

Integrated conversion of solid carbonaceous matrix -Production of Biochar and use thereof, biogenic activated carbon and catalytic supports.

The results are listed in Table XIV.

**Table XIV**

| Solid carbonaceous matrix as is 74 | Temp. [°C] | Residence time [minutes] | Distribution of products | | | | |
|---|---|---|---|---|---|---|---|
| | | | BioChar 111 [%] | Liquid (BioPyroLiq 117) | | | BioPyroGas 124 [%] |
| | | | | total [%] | Oleous phase | Watery phase | |
| Rape seeds | 350 | 10 | 57,4 | 35,2 | | | 7,4 |
| Rape seeds | 550 | 10 | 16 | 61,5 | 51,2 | 10,3 | 22,3 |

The experimental results confirm the operational flexibility of the modular plant. Under the same other conversion conditions, just the temperature variable can determine a variation of production of Biochar 111 in mass up to 360%. The production of Biochar 111 occurs simultaneously and in an integrated manner with the production and valorization of the other liquid (BioPyroLiq 117) and gaseous (BioPyroGas 124) matrices produced by the pyrolysis in the plant configuration described in example VII. The production of solid and/or liquid "bio-energetic carriers" determines a new production chain of bio-energy 132, biomaterial for the capture of CO₂ and bio-products ("soil improvers") for the intensification of agricultural cultivations as "soil amendment". An additional option is the joint use of biochar with fresh biomass for the production of pellets or brickets of a "cocktail" formed by biochar and the fresh biomass (BioCok 126). In this case, the pressed fresh biomass can have the function of a binder for compaction. Typically, the Biochar 111 increases the energetic density of the biomass reaching up to values of calorific value of about 30.000kJ kg⁻¹ with respect to a typical value of the starting biomass of 17-18.000kJ kg⁻¹ with an enhancement of 76%. In general, the production of Biochar 111 has a positive global climatic impact since it decelerates the cycle of carbon, reducing the greenhouse effect gases (i.e. CO₂) contrary to what occurs with combustion. Biochar 111 is visually presented as "carbon black" and is resisting chemical and biological degradation. It is characterized by its stability through time (up to several hundred years). Biochar 111 contains aromatic substances that present a strong interaction with mineral particles and a spongeous structure characterized by high O/C and surface/volume ratios, capable of holding conspicuous amounts of exchangeable cations. It can be scientifically predicted that for each kg of Biochar 111 (typically containing about 70-80% in weight of carbon) that is used "una tantum" in cultivation lands up to 3 kg of CO₂ are captured, since the carbon is no further available for a subsequent conversion cycle. Its interaction with soils induces a higher fertility translating into a higher photosynthetic efficiency, in an enhanced development of the biomass, thus a higher capacity for carbon sequestration. When the biomass is finally used to produce Biochar, the value of the bio-energetic chain is intensified. With the modular plant it is possible to obtain a large variety of Biochar 111 that have characteristics suitable for different applications. In the case of applications on the gramineous cultures it has been experimentally verified that the production under controlled conditions in a climatic cell surprisingly passed from 4.5 kg of fresh weight per pot to 11.5kg, i.e. an increments of about 225% in the span of 150 days of culture. The culture soil was formulated with 60% in volume of Biochar amendment derived from the pyrolysis of residue from the pressing of rape seeds and properly mixed and homogenized in the culture soil.

In the case of agro-energetic culture, it is possible to enhance the productive yields of primary biomass per hectare, in particular those classifiable as Short Rotation (e.g. Arundo Donax, Mischantus, etc.). This condition surprisingly occurred with the targeted experimentation for example with Miscanthus Sinensis "Zebrinus" where the production under controlled conditions in greenhouse (experimentation of "Short Rotation") passed from 9.5g of dried weight to 12g, with an increment of 26% in a time span of about 270 days in soil augmented with 20% of Biochar derived from the pyrolysis of wheat straw. The plants were acquired already in a pot and transplanted in a more appropriate pot. The soil used for such culture was made up of a mixture of blonde peats and clay and fertilizer 14-16-18 equivalent to 0.8kg m⁻³ and had a pH 5.5-6.2, an electrical conductivity (Dutch method 1:1.5 v/v) equivalent to 0.5-0.9ms cm⁻¹, capacity for the air 10% v/v, water easily available 30% v/v, irrigation as required. On the other hand, the fertilizers were composed of 2g of P₂O₅ over 20 litres of sub-layer of triple perphosphate (0,200g per pot corresponding to 4,35 - Title = 46%), 2g of K₂O over 20 litres of layer of potassium sulphate (0.220g per pot) corresponding to 4,35 - Title = 46%, Nitrogen 2.76g over 20 litres sub-layer 80.276g per pot), corresponding to 6g of urea - Title = 46%. It was experimentally observed that in poor soils and on dedicated cultures an additional contribution to the intensification of the growing factors of the plants can be obtained by the addition of microelements (Fe, Zn, Mo, Cu, Mn, etc.) by inoculating the same with chelating agents (e.g. ethylene-diammine-tetracetic acid - EDTA Diethylene-triamine-pentaacetic acid - DTPA) of which the Biochar is loaded. This transmission can be reintegrated by micronutrients with cycles of dripping irrigation. The experimental results obtained demonstrate the applicability and the effectiveness of this invention to selectively convert some typologies of biochar indicated here above into "activated carbon" (BioActCoal 111) by activation. This activation process is realized in modules C 109 configured in cascade by heating up to 900°C in the rotary reactor with the injection of steam such to determine the effect of "Steam Explosion - SE" at cycles finalized toward creating an elevated superficial area up to 800m² g⁻¹ and more. To obtain higher superficial areas, up to 1200-1400m² g⁻¹, it is necessary to convert more valuable materials for this type of application which resulted, at simplifying but not limiting title, coconut shells, pistachio shells, peanut shell, hazelnut shell, solid residues of coffee, etc.). The activated carbon, depending upon the type of application, can be formulated in different particle sizes and geometrical forms (e.g. spheres, brickets, pellets, etc.) suitable for direct application or to be impregnated by specific catalysts (e.g. noble metals such as palladium etc.). In the case of filtration of organic supports, the activated carbon can be re-functionalized by the application of a pyrolysis possibly assisted by concentrated irradiation device with microwaves 21 capable of restoring the initial exchange surface and at the same time self-cleaning by degrading the undesired organic compounds inside the matrix itself. This application can be advantageously used in the conversion of rice straw with a high ash content, to obtain Silicium of biogenic origin at high purity and high catalytic surface for adsorption or catalysis processes.

### EXAMPLE IX

### Integrated conversion of solid carbonaceous matrix - Pyrogasification

The results are indicated in Table XV

**Table XV**

| Solid carbonac eous matrix as is (74) | Humid ity [%] | Temp. in 2 stages [°C] | Reside nce time [min] | Conv ersio n effici ency | Biosyngas 124 | | | | | | |
|---|---|---|---|---|---|---|---|---|---|---|---|
| | | | | | Composition | | | | LHV [kJ Nm^{- 3} ] | tars conte nt [mg Nm^{- 3}] | POPs - PCDD/PC DF content [ng I-TEQ Nm⁻³] |
| | | | | | CO | H₂ | CH 4 | CO 2 | | | |
| Wood chipping | <15% | 500-850 | 7 | 78% | 30-45 | 17 | 4 | 40 | 7-10000 | <50 | 0,1 |

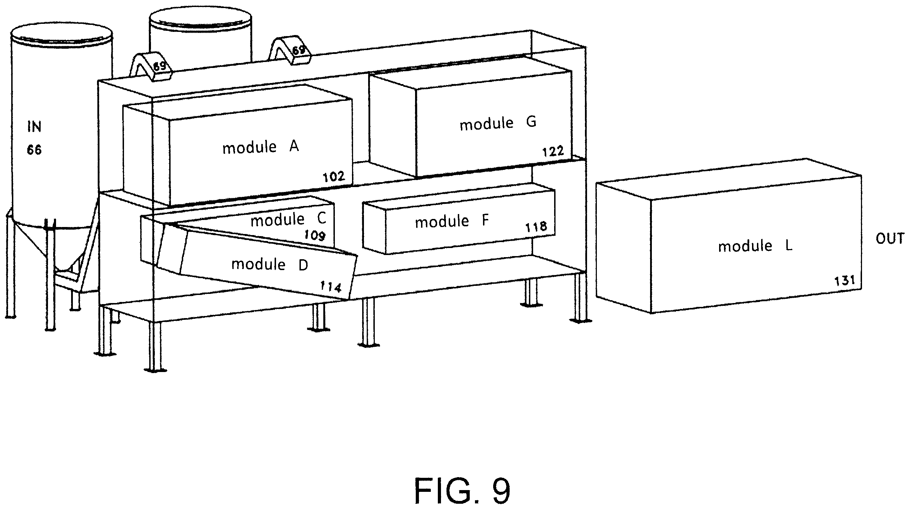

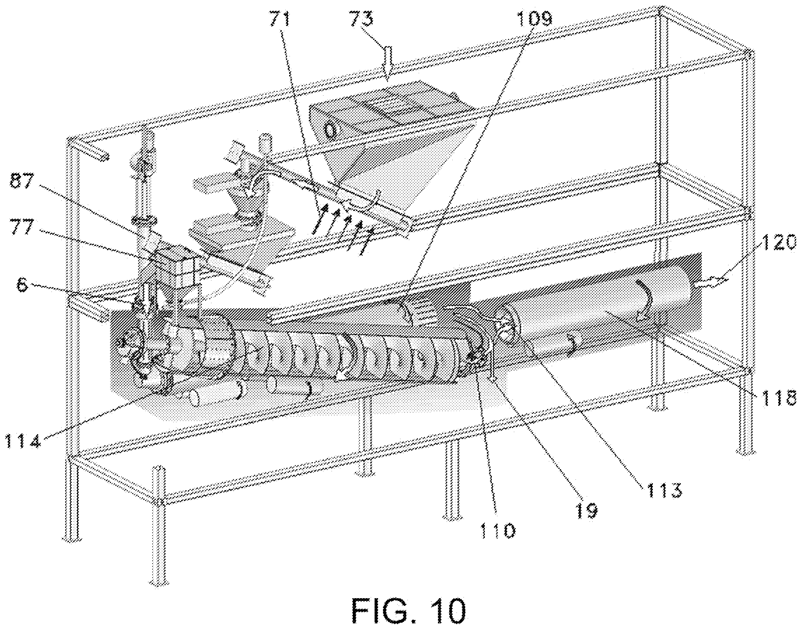

The oxidizing agent in the tests was made of a mixture of air 119 steam 104, but mixtures of air enriched with oxygen 119, coming from module H 127 can be used. The modular plant relative to the pyrogasification application, as indicated in Figure 9 and Figure 10, is based upon the integration of modules A 102, C 109, D 114, F 118, G 122, L 131 and I 133. The pyrogasification process is subdivided into two macro-stages finalized towards the complete conversion of the biomass. The operating temperatures are 500°C for the first stage, whereas the second stage operates at 850°C. A first option can be the simultaneous production of Biochar 111 and quality gaseous carbonaceous matrix (Biosyngas 124). The second option is to maximize the production of Biosyngas 124 only. When financially justified by the final application, oxygen with technical purity grade can be used as oxidizing agent to have a very high quality syngas 124 in terms of greater calorific value and minimizing the content of NOₓ compounds. However, differently from a fluidized bed gasifier, where the solid carbonaceous matrix (e.g. biomass) is directly introduced, this gasification minimizes the problems of elutriation of the finest particles (carbon and/or ashes) since the second stage is focused only on the volatile carbonaceous fraction, offering parallelly operational flexibility, since the conversion stages are separated. Also, this plant configuration has the feature of having a single point of emission of the cogeneration group, since the gaseous flow dedicated to heating remains confined inside the plant itself. This application with biomasses can also be extended to other typologies of carbonaceous matrices deriving from residual polymeric materials, such as used tires, plastic and/or thermo-setting plastics.

### EXAMPLE X

### Integrated conversion of gaseous carbonaceous matrices -Production of multi-wall carbon nanotubes, syngas and/or Hydrogen.

An additional conversion application of heterogeneous solid carbonaceous matrices as they are 66 with the modular plant is the production at high temperature of MWCNT - MultiWall Carbon NanoTubes 138 for applications of advanced materials in the presence of catalyzers. The modular plant for the application relative to MWCNT 138 and syngas 120 is based upon the integration of modules A 102, C 109, D 114, F 118, G 122, L 131 and I 133. The production process of MWCNT 138 is subdivided into two macro stages finalized towards the complete conversion of the initial carbonaceous matrix into syngas 120 with residual material composed by ash only; that is, all the char is converted in the sub-stoichiometric oxidation stage. For this application, the catalytic hyper-dynamic gasification is to be intended subdivided, in turn, into two conversion stages. In the first stage the conversion into syngas 120 with high quality and low content of tars takes place, followed by a second stage of simultaneous deposition of multiwall carbon nanotubes 138, using appropriate catalysts providing their formation. The multiwall carbon nanotubes 138 shall be subsequently separated from the gaseous flow 120. The typical catalysers can be those indicated in the detailed description of the invention Ni, CaO, CaCO₃, ferrocene Fe(C₅H₅)₂ and other metallorganic compounds and their derivatives, inter metallic compounds obtained from carbonates of Lanthanum, Neodymium and Nickel i.e. LaNi₅ e NdNi₅. The pyrolysis temperatures are preferably 500°C, whereas the conversion and deposition of the portion of the multiwall carbon nanotubes operates at about 900°C. As subproduct of this process, a syngas 138 with high concentration of Hydrogen is obtained.

## Claims

1. Modular plant for performing conversion processes of at least one carbonaceous matrix (6), said plant including at least one basic module including at least:
- a reactor (9) rotating about a central longitudinal axis having an inclination from 0° to 45° in respect to a horizontal plan, said rotating reactor having (9) a substantially cylindrical centre body closed at a first entrance end by a stationary head (8) and at a second end by a head fixed to the rotating reactor (9), a first conduit (7) for introducing said matrix (6) into the rotating reactor (9) and a second conduit (5) for introducing a thermally conductive carrier (4) into the rotating reactor (9) being fixed to said stationary head (8),
- a stationary casing (1) which integrally encloses said rotating reactor (9), whereby it is sealed in respect to the external environment, said casing (1) having openings for the passage of said first and second conduit, as well as for the exit of the converted carbonaceous matrix (17, 19) and the thermally conductive carrier (4), and
- an assembly (22) for rotatably driving said rotating reactor (9) which is deprived of internal members having a relative rotation motion in respect of said cylindrical body.

2. Modular plant according to claim 1, wherein said thermally conductive carrier (4) is constituted by a plurality of solid bodies, in particular metal spheres, or a liquid selected from the group consisting of molten metals, alloys and salts, liquefied cryogenic fluids and substances which are liquid at room temperature, such as oils, water solutions and organic fluids.

3. Modular plant according to claim 1 or 2, which is provided of a device for cooling or heating said thermally conductive carrier which is continuously and in closed loop re-circulated within said rotating reactor (9).

4. Modular plant according to any one of the previous claims, wherein at least one internal member (11) suitable for interacting with said carbonaceous matrix (6) and said thermally conductive carrier (4) is fixed to the internal surface of the rotating reactor (9), said internal member (11) preferably being of the drawer (23), ploughshare (24), winglet (25), solid or perforated Archimedean screw (26) with solid or possibly perforated shaft, solid or perforated spiral (27) or basket (28) type.

5. Modular plant according to claim 4, wherein said internal member (11) is provided with injectors (30) and is associated to a rotating distributor (31) of at least one process fluid (33), which is leak-proof assembled on the stationary head (15) and is suitable for allowing the feeding of said process fluid (33) into the rotating reactor (9).

6. Modular plant according to any one of the previous claims, wherein said driving assembly (22) comprises at least one entity selected among motorized rollers (37) which interact by friction with the external surface of the body of the rotating rector (9), a motorized pinion (39) which engages a toothed crown (40) fixed to the rotating rector (9), a motorized shaft (42) fixed outwards the mobile head in correspondence of the longitudinal axis, and a flexible member (44), such as a belt or a chain, which connects a motor shaft to an external surface of the body of the rotating rector (9).

7. Modular plant according to any one of the previous claims, wherein said stationary casing (1) comprises at least one thermally and/or acoustically insulating layer (12) which is internal and/or external, wherein an auxiliary heating system (13) is preferably integrated.

8. Modular plant according to any one of the previous claims, wherein the second head of the center body of the rotating rector (9) has a grid surface (14) whose mesh has a size which allows the passage of the converted matrix (19) towards the respective opening done in the casing (1) and retains the solid bodies making thermally conductive carrier (4).

9. Modular plant according to any one of the previous claims, wherein said basic module includes one or more chambers with a concentrated irradiation device, such as ultrasounds, microwaves, RF, electromagnetic and/or power laser (21, 64).

10. Modular plant according to any one of the previous claims 1 to 7, wherein in the stationary head (48) at least one opening is made for allowing the passage of a liquid making said thermally conductive carrier (4) from inside of the rotating reactor towards a hollow space defined between the casing (1) and the rotating rector (9).

11. Modular plant according to any one of the previous claims 1 to 7, wherein the head fixed to the rotating reactor (9) has a friction member (56) passing leak-proof through an end flange (16) of the casing (1), a heat-exchanger (54) or a cathode (55) which extends within the rotating reactor (9) being inserted within said friction member (56).

12. Modular plant according to any one of the previous claims 1 to 7, wherein the portion of the casing (1) close to the head fixed to the body of the rotating reactor (9) is provided with interfaces suitable for allowing the exit of the converted carbonaceous matrices (58).

13. Modular plant according to claim 12, wherein said thermally conductive carrier is constituted by a molten metal, preferably Sn, Bi, Zn, Pb and Al and/or alloys thereof with catalytic metals chosen in the group constituted by Fe, Ni, Cr, Mn, Co, Ti, concentrated irradiation devices (64), such as microwaves, RF and/or power laser suitable for reconverting the oxides being possibly formed in the metals, being also comprised in an exit zone of the converted carbonaceous matrices (58).

14. Modular plant according to any one of the previous claims 1 to 7, wherein a chamber (52), wherein a thermo-stating fluid preferably produced by the combustion of a fraction of the carbonaceous matrix (6) or products derived therefrom (60) flows, is contiguous to at least a part of the external wall of said casing (1), whereby the plant is energetically auto-sustained.

15. Modular plant according to any one of the previous claims, comprising a plurality of basic modules with the same or different application configuration, operating in different conditions and being interconnected in series or in parallel, including a further module (I 133), and arranged within at least one container, whereby the pre-fabrication, logistics, installation and safe management in a desired site is rendered easier.

16. Modular plant according to any one of the previous claims, comprising, beyond one or more basic modules, a controlled feeding module (A 102) provided with means for drying and mixing the solid carbonaceous matrices (66, 74) and means for expelling the solid carbonaceous matrices (100), wherein preferably said means for expelling comprise an Archimedean screw (83) possibly with variable pitch, or a pusher device (87) provided of a driving mechanism, such as a rod/crank mechanism (89), a piston (90) or a pinion/rack mechanism (91).

## Patentansprüche

1. Modulare Anlage zum Durchführen von Umwandlungsprozessen mindestens einer Kohlenstoffmatrix (6), wobei die Anlage mindestens ein Grundmodul aufweist, das mindestens aufweist:
- einen Reaktor (9), der sich um eine zentrale Längsachse mit einer Neigung zwischen 0° und 45° bezüglich einer horizontalen Ebene dreht, wobei der sich drehende Reaktor (9) einen im Wesentlichen zylindrischen zentralen Körper, der an einem ersten Eingangsende durch einen stationären Kopf (8) und an einem zweiten Ende durch einen an dem sich drehenden Reaktor (9) fixierten Kopf verschlossen ist, aufweist und eine erste Leitung (7) zum Einbringen der Matrix (6) in den sich drehenden Reaktor (9) und eine zweite Leitung (5) vom Einbringen eines thermisch leitfähigen Trägers (4) in den sich drehenden Reaktor (9) an dem stationären Kopf (8) fixiert sind,
- ein stationäres Gehäuse (1), das den sich drehenden Reaktor (9) integral aufnimmt, wodurch er bezüglich der Umgebung angedichtet ist, wobei das Gehäuse (1) Öffnungen für den Durchgang der ersten und der zweiten Leitung sowie für den Austritt der umgewandelten Kohlenstoffmatrix (17, 19) und des thermisch leitfähigen Trägers (4) aufweist, und
- eine Anordnung (22) zum drehend Antreiben des sich drehendes Reaktors (9), die keine internen Bauteile mit eine Relativdrehbewegung bezüglich des zylindrischen Körpers aufweist.

2. Modulare Anlage nach Anspruch 1, bei der der thermisch leitfähige Träger (4) durch mehrere Festkörper, insbesondere Metallkugeln, oder eine Flüssigkeit, die aus der Gruppe, die aus geschmolzenen Metallen, Legierungen und Salzen, verflüssigten Kältefluiden und Substanzen, die bei Raumtemperatur flüssig sind, beispielsweise Öle, wässrige Lösungen und organische Fluide, besteht, ausgewählt ist, gebildet wird.

3. Modulare Anlage nach Anspruch 1 oder 2, bei der eine Vorrichtung zum Kühlen oder Erwärmen des thermisch leitfähigen Trägers vorgesehen ist, der kontinuierlich und in einem geschlossenen Kreis in dem sich drehenden Reaktor (9) rezirkuliert wird.

4. Modulare Anlage nach einem der vorhergehenden Ansprüche, bei der mindestens ein internes Bauteil (11), das geeignet ist für eine Wechselwirkung mit der Kohlenstoffmatrix (6) und dem thermisch leitfähigen Träger (4), an der Innenfläche des sich drehenden Reaktors (9) fixiert ist, wobei das interne Bauteil (11) bevorzugt vom Typ einer Schublade (23), einer Pflugschar (24), eines Winglets (25), einer festen oder mit Löchern versehenen archimedischen Schraube (26) mit fester oder möglicherweise mit Löchern versehener Welle, einer festen oder mit Löchern versehenen Spirale (27) oder eines Korbs (28) ist.

5. Modulare Anlage nach Anspruch 4, bei der das interne Bauteil (11) mit Injektoren (30) versehen ist und einem sich drehenden Verteiler (31) mindestens eines Prozessfluids (33) zugeordnet ist, der dichtend an dem stationären Kopf (15) angebracht ist und geeignet ist zum Ermöglichen der Zufuhr des Prozessfluids (33) in den sich drehenden Reaktor (9).

6. Modulare Anlage nach einem der vorhergehenden Ansprüche, bei der die Antriebsanordnung (22) mindestens eine Einheit aufweist, die ausgewählt ist aus motorisierten Walzen (37), die durch Reibung mit der Außenfläche des Körpers des sich drehenden Reaktors (9) wechselwirken, einem motorisierten Ritzel (39), das einen an dem sich drehenden Reaktor (9) fixierten Zahnkranz (40) in Eingriff nimmt, einer motorisierten Welle (42), die entsprechend der Längsachse außerhalb des mobilen Kopfs fixiert ist, und einem flexiblen Bauteil (44) wie einem Riemen oder einer Kette, das eine Motorwelle mit einer Außenfläche des Körpers des sich drehenden Reaktors (9) verbindet.

7. Modulare Anlage nach einem der vorhergehenden Ansprüche, bei der das stationäre Gehäuse (1) mindestens eine thermisch und/oder akustische isolierende Schicht (12) aufweist, die innen und/oder außen vorgesehen ist, wobei bevorzugt ein zusätzliches Heizsystem (13) integriert ist.

8. Modulare Anlage nach einem der vorhergehenden Ansprüche, bei der der zweite Kopf des zentralen Körpers des sich drehenden Reaktors (9) eine Gitterfläche (14) aufweist, deren Maschen eine Größe aufweisen, die den Durchgang der umgewandelten Matrix (19) in Richtung der jeweiligen Öffnung in dem Gehäuse (1) erlaubt und die Festkörper, die den thermisch leitfähigen Träger (4) bilden, zurückhält.

9. Modulare Anlage nach einem der vorhergehenden Ansprüche, bei der das Grundmodul eine oder mehrere Kammern mit einer konzentrierten Bestrahlungsvorrichtung für eine Bestrahlung mit beispielsweise Ultraschall, Mikrowellen, HF, elektromagnetischen Lasern oder Leistungslasern (21, 64) aufweist.

10. Modulare Anlage nach einem der vorhergehenden Ansprüche 1 bis 7, bei der in dem stationären Kopf (48) mindestens eine Öffnung zum Erlauben des Durchgangs einer Flüssigkeit, die den thermisch leitfähigen Träger (4) bildet, von dem Inneren des sich drehenden Reaktors zu einem Hohlraum, der zwischen dem Gehäuse (1) und dem sich drehenden Reaktor (9) definiert ist, ausgebildet ist.

11. Modulare Anlage nach einem der vorhergehenden Ansprüche 1 bis 7, bei der der an den sich drehenden Reaktor (9) fixierte Kopf ein Reibungsbauteil (56) aufweist, das abgedichtet durch einen Endflansch (16) des Gehäuses (1) geht, wobei ein Wärmetauscher (54) oder eine Kathode (55), der bzw. die sich in dem sich drehenden Reaktor (9) erstreckt, in das Reibungsbauteil (56) eingeführt ist.

12. Modulare Anlage nach einem der vorhergehenden Ansprüche 1 bis 7, bei der der Abschnitt des Gehäuses (1) in der Nähe des an dem Körper des sich drehenden Reaktors (9) fixierten Kopfs mit Schnittstellen, die den Austritt der umgewandelten Kohlenstoffmatrizen (58) erlauben, versehen ist.

13. Modulare Anlage nach Anspruch 12, bei der der thermisch leitfähige Träger aus einem geschmolzenen Metall, bevorzugt Sn, Bi, Zn, Pb und Al und/oder Legierungen derselben mit katalytischen Metallen aus der Gruppe, die durch Fe, Ni, Cr, Mn, Co, Ti gebildet wird, besteht, wobei konzentrierte Bestrahlungsvorrichtungen (64), etwa Vorrichtungen zur Bestrahlung mit Mikrowellen, HF und/oder Leistungslasern, die zum Zurückwandeln der möglicherweise in den Metallen ausgebildeten Oxide geeignet sind, ebenfalls in einer Austrittszone der umgewandelten Kohlenstoffmatrizen (58) vorgesehen sind.

14. Modulare Anlage nach einem der vorhergehenden Ansprüche 1 bis 7, bei der eine Kammer (52), in der ein Thermostatfluid, das bevorzugt durch die Verbrennung einer Fraktion der Kohlenstoffmatrix (6) oder von daraus abgeleiteten Produkten (60) produziert wird, strömt, zusammenhängend mit mindestens einem Teil der Außenwand des Gehäuses (1) ausgebildet ist, wodurch die Anlage energetisch selbstversorgt ist.

15. Modulare Anlage nach einem der vorhergehenden Ansprüche, mit mehreren Grundmodulen mit derselben oder einer unterschiedlichen Anwendungskonfiguration, die unter unterschiedlichen Bedingungen arbeiten und in Reihe oder parallel verbunden sind, einschließlich eines weiteren Moduls (I 133), und in mindestens einem Behälter angeordnet sind, wodurch eine Vorherstellung, eine Logistik, ein Einbau und eine sichere Handhabung an einem gewünschten Ort erleichtert werden.

16. Modulare Anlage nach einem der vorhergehenden Ansprüche, mit einem gesteuerten Zufuhrmodul (A 102), das mit einem Mittel zum Trocknen und Mischen der festen Kohlenstoffmatrizen (66, 74) und einem Mittel zum Ausstoßen der festen Kohlenstoffmatrizen (100) versehen ist, zusätzlich zu einem oder mehreren Grundmodulen, wobei bevorzugt das Mittel zum Ausstoßen eine archimedische Schraube (83), möglicherweise mit variabler Schrittweite, oder eine Drückervorrichtung (87) mit einem Antriebsmechanismus wie einem Stab/Kurbel-Mechanismus (89), einem Kolben (90) oder einem Ritzel/Zahnstangen-Mechanismus (91) aufweist.

## Revendications

1. Installation modulaire permettant de réaliser des procédés de conversion d'au moins une matrice (6) carbonée , ladite installation comprenant au moins un module de base comprenant au moins :
- un réacteur (9) tournant autour d'un axe longitudinal central ayant une inclinaison de 0° à 45° par rapport à un plan horizontal, ledit réacteur (9) rotatif ayant un corps central sensiblement cylindrique fermé à une première extrémité d'entrée par une tête fixe (8) et à une deuxième extrémité par une tête fixée au réacteur (9) rotatif, un premier conduit (7) pour l'introduction de ladite matrice (6) dans le réacteur(9) rotatif et un deuxième conduit (5) pour l'introduction d'un support thermiquement conducteur (4) dans le réacteur (9) rotatif fixé à ladite tête fixe (8),
- un boîtier fixe (1) qui enferme entièrement ledit réacteur rotatif (9), moyennant quoi il est scellé par rapport à l'environnement externe, ledit boîtier (1) ayant des ouvertures pour le passage dudit premier et deuxième conduit, ainsi que pour la sortie de la matrice carbonée convertie (17, 19) et du support thermiquement conducteur (4), et
- un ensemble (22) pour l'entraînement rotatif dudit réacteur (9) rotatif qui est dépourvu d'éléments internes ayant un mouvement de rotation relatif par rapport audit corps cylindrique.

2. Installation modulaire selon la revendication 1, dans laquelle ledit support thermiquement conducteur (4) est constitué d'une pluralité de corps solides, en particulier de sphères métalliques, ou d'un liquide sélectionné dans le groupe constitué de métaux, alliages et sels fondus, fluides cryogéniques liquéfiés et substances qui sont liquides à température ambiante, tels des huiles, des solutions aqueuses et des fluides organiques.

3. Installation modulaire selon la revendication 1 ou 2, qui est dotée d'un dispositif de refroidissement ou de chauffage dudit support thermiquement conducteur qui est remis en circulation continuellement et en boucle fermée à l'intérieur dudit réacteur (9) rotatif .

4. Installation modulaire selon l'une quelconque des revendications précédentes, dans laquelle au moins un élément interne (11) adapté pour interagir avec ladite matrice (6) carbonée et ledit support thermiquement conducteur (4) est fixé à la surface interne du réacteur (9) rotatif, ledit élément interne (11) étant de préférence du type tiroir (23), soc (24), ailerette (25), vis d'Archimède pleine ou perforée (26) avec arbre plein ou éventuellement perforé, spirale pleine ou perforée (27) ou panier (28).

5. Installation modulaire selon la revendication 4, dans laquelle ledit élément interne (11) est doté d'injecteurs (30) et est associé à un distributeur rotatif (31) d'au moins un fluide de traitement (33), qui est monté à l'épreuve des fuites sur la tête fixe (15) et est adapté pour permettre l'alimentation du réacteur (9) rotatif en dit fluide de traitement (33).

6. Installation modulaire selon l'une quelconque des revendications précédentes, dans laquelle ledit ensemble(22) d'entraînement comprend au moins une entité sélectionnée parmi des galets motorisés (37) qui interagissent par friction avec la surface externe du corps du réacteur (9) rotatif, un pignon motorisé (39) qui entre en prise avec une couronne dentée (40) fixée au réacteur (9) rotatif, un arbre motorisé (42) fixé vers l'extérieur de la tête mobile en correspondance avec l'axe longitudinal, et un élément flexible (44), telle une courroie ou une chaîne, qui relie un arbre de moteur à une surface externe du corps du réacteur (9) rotatif .

7. Installation modulaire selon l'une quelconque des revendications précédentes, dans laquelle ledit boîtier fixe (1) comprend au moins une couche thermiquement et/ou acoustiquement isolante (12) qui est interne et/ou externe, dans laquelle un système de chauffage auxiliaire (13) est de préférence intégré.

8. Installation modulaire selon l'une quelconque des revendications précédentes, dans laquelle la deuxième tête du corps central du réacteur (9) rotatif a une surface de grille (14) dont le treillis a une taille qui permet le passage de la matrice convertie (19) vers l'ouverture respective ménagée dans le boîtier (1) et retient les corps solides formant le support thermiquement conducteur (4).

9. Installation modulaire selon l'une quelconque des revendications précédentes, dans laquelle ledit module de base comprend une ou plusieurs chambres avec un dispositif d'irradiation concentrée, tels des ultrasons, microondes, RF, électromagnétique et/ou laser de puissance (21, 64).

10. Installation modulaire selon l'une quelconque des revendications précédentes 1 à 7, dans laquelle dans la tête fixe (48) au moins une ouverture est ménagée pour permettre le passage d'un liquide formant ledit support thermiquement conducteur (4) de l'intérieur du réacteur rotatif vers un espace creux défini entre le boîtier (1) et le réacteur (9) rotatif.

11. Installation modulaire selon l'une quelconque des revendications précédentes 1 à 7, dans laquelle la tête fixée au réacteur (9) rotatif a un élément de friction (56) passant à l'épreuve des fuites à travers une bride d'extrémité (16) du boîtier (1), un échangeur de chaleur (54) ou une cathode (55) qui s'étend à l'intérieur du réacteur (9) rotatif inséré à l'intérieur dudit élément de friction (56).

12. Installation modulaire selon l'une quelconque des revendications précédentes 1 à 7, dans laquelle la portion du boîtier (1) proche de la tête fixée au corps du réacteur (9) rotatif est dotée d'interfaces adaptées pour permettre la sortie des matrices carbonées converties (58).

13. Installation modulaire selon la revendication 12, dans laquelle ledit support thermiquement conducteur est constitué d'un métal fondu, de préférence Sn, Bi, Zn, Pb et Al et/ou de ses alliages avec des métaux catalytiques choisis dans le groupe constitué de Fe, Ni, Cr, Mn, Co, Ti, des dispositifs d'irradiation concentrée (64), tels des microondes, RF et/ou laser de puissance adaptés pour reconvertir les oxydes éventuellement formés dans les métaux, étant également compris dans une zone de sortie des matrices carbonées converties (58).

14. Installation modulaire selon l'une quelconque des revendications précédentes 1 à 7, dans laquelle une chambre (52), dans laquelle un fluide thermostatique produit de préférence par la combustion d'une fraction de la matrice (6) carbonée ou de produits dérivés de celle-ci (60) circule, est contigüe à au moins une partie de la paroi externe dudit boîtier (1), moyennant quoi l'installation est énergétiquement auto-entretenue.

15. Installation modulaire selon l'une quelconque des revendications précédentes, comprenant une pluralité de modules de base avec la même configuration d'application ou une configuration d'application différente, fonctionnant dans différents états et étant interconnectés en série ou en parallèle, comprenant un autre module (I 133), et agencés à l'intérieur d'au moins un conteneur, moyennant quoi la préfabrication, la logistique, l'installation et la gestion sûre dans un site souhaité sont simplifiées.

16. Installation modulaire selon l'une quelconque des revendications précédentes, comprenant, au-delà d'un ou plusieurs modules de base, un module d'alimentation commandé (A 102) doté de moyens de séchage et de mélange des matrices carbonées solides (66, 74) et de moyens d'expulsion des matrices carbonées solides (100), dans laquelle de préférence lesdits moyens d'expulsion comprennent une vis d'Archimède (83) éventuellement à pas variable, ou un dispositif poussoir (87) doté d'un mécanisme d'entraînement, tel qu'un mécanisme bielle/manivelle (89), un piston (90) ou un mécanisme pignon/crémaillère (91).
